(19) Europäisches Patentamt
European Patent Office
Office européen des brevets

(11) EP 3 126 416 B1

(12) **EUROPEAN PATENT SPECIFICATION**

(45) Date of publication and mention of the grant of the patent:
**07.08.2019 Bulletin 2019/32**

(21) Application number: **15717333.7**

(22) Date of filing: **30.03.2015**

(51) Int Cl.:
***C08F 222/38*** *(2006.01)* ***C08F 230/08*** *(2006.01)*

(86) International application number:
**PCT/US2015/023251**

(87) International publication number:
**WO 2015/153404 (08.10.2015 Gazette 2015/40)**

(54) **SILICONE ACRYLAMIDE COPOLYMER**

SILIKON-ACRYLAMID-COPOLYMER

COPOLYMÈRE DE SILICONE ET D'ACRYLIQUEAMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2014 US 201461972862 P**
**27.03.2015 US 201514671010**

(43) Date of publication of application:
**08.02.2017 Bulletin 2017/06**

(73) Proprietor: **Johnson & Johnson Vision Care, Inc.**
**Jacksonville, FL 32256 (US)**

(72) Inventors:
- **TAMIYA, Ryuta**
**Otsu**
**Shiga 520-0842 (JP)**
- **FUJISAWA, Kazuhiko**
**Otsu**
**Shiga 520-0844 (JP)**
- **NAKAMURA, Masataka**
**Otsu**
**Shiga 520-0846 (JP)**
- **MAGGIO, Thomas L.**
**Jacksonville, FL 32256 (US)**
- **TURNAGE, Michelle Carman**
**Jacksonville, FL 32207 (US)**
- **CLARK, Michael R.**
**Jacksonville, FL 32256 (US)**

(74) Representative: **Kirsch, Susan Edith**
**Carpmaels & Ransford LLP**
**One Southampton Row**
**London WC1B 5HA (GB)**

(56) References cited:
**WO-A1-2013/024801** **US-A1- 2011 237 766**

EP 3 126 416 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a silicone acrylamide copolymer, which may be suitably used for medical devices such as ophthalmic lenses, endoscopes, catheters, transfusion tubes, gas transport tubes, stents, sheaths, cuffs, tube connectors, access ports, drainage bags, blood circuits, wound covering materials and various kinds of medicine carriers, particularly contact lenses, intraocular lenses, artificial corneas and the like.

BACKGROUND

In recent years, silicone hydrogels have been disclosed as useful materials continuous wear contact lenses. The silicone hydrogels may be obtained by combining a silicone component with a hydrophilic component, and as one example thereof is known a silicone hydrogel obtained by polymerizing a polymerization mixture containing a silicone acrylamide monomer, and a hydrophilic acrylamide monomer, a hydrophilic methacrylate and an internal wetting agent for imparting wettability to a surface.

However, the compositions described in US7396890 and US7214809 contain relatively large amounts of methacrylate such that acrylamide monomer having a polymerization rate constant higher than that of the methacrylate cannot exhibit a sufficient polymerization rate in homopolymerization, resulting in a reduction in the polymerization rate of the whole system.

Japanese Patent Laid-Open No. H10-212355 and US4711943 disclose silicone hydrogels comprised of a silicone acrylamide monomer and a hydrophilic acrylamide monomer. Such a silicone hydrogel has the composition mostly constituted by acrylamide monomers, and improvement of the polymerization rate of the whole system is expected. However, the crosslinkers used have methacrylate groups such as ethylene glycol dimethacrylate or tetraethylene glycol dimethacrylate. When such crosslinkers are copolymerized with a (meth)acrylamide monomer, the crosslinker is consumed in an early stage of polymerization, leading to a heterogenous polymer network which may result in optical distortions when a contact lens is produced using such a polymer. US4711943 also discloses a composition containing a silicone bisacrylamide monomer, but there has been the problem that a bisacrylamide monomer is used as a main component and for example, when the composition is used for a contact lens, particularly soft contact lens, the lens is so hard that wear comfort is compromised. Further, the abovementioned dimethacrylate is also used for a crosslinker in this composition, and a contact lens obtained has a problem in optical properties.

WO 2013/024801 discloses a copolymer containing a monofunctional monomer component having one polymerizable functional group and a silicone site per molecule.

WO 2010/147874, WO 2010/071691, US2011/0009519 and EP1956033 disclose silicone bis (meth) acrylamide monomers having two (meth) acrylamide groups.

WO 2010/147874 discloses Ma2D37, a silicone bis(meth)acrylamide monomer having 37 silicone repeating units. However, the only mono-functional silicone (meth) acrylamide monomer polymerized with Ma2D37 is a branched silicone (meth) acrylamide monomer, and the copolymer obtained by copolymerizing these monomers has undesirably long shape recovery. In the present invention, "shape recovery" means that a polymer can recover tensile strength in short time after polymer elongation. Shape recovery is evaluated by measuring stress zero time as described in measurement method in Examples.

WO 2010/071691 discloses silicone bis(meth)acrylamide monomers having molecular weights of 4500 and 11000. However, it is only a composition with a silicone dimethacrylate monomer that is disclosed as a monomer which forms a lens composition in a specific example. Furthermore, the mono-functional silicone (meth)acrylamide monomer that is disclosed as a monomer which is copolymerized with this silicone dimethacrylate monomer is a branched monomer, a copolymer obtained in this case has a problem in shape recovery and in the first place, a heterogenous polymer network described above may result in causing optical distortion.

US2011/0009519 also discloses Ma2D37 as a silicone bis(meth)acrylamide. A monomer having a linear silicone is disclosed as a mono-functional silicone monomer which is copolymerized with the abovementioned monomer, but this monomer does not use an acrylamide group but uses a methacrylate group as a radically polymerizable organic group, and has a problem in the polymerization rate.

EP1956033 discloses a silicone bisacrylamide monomer in Synthesis Example 10. However, this monomer is only used as an intermediate for synthesizing a silicone tetraacrylamide compound in Example 10, and there are no descriptions of copolymerization with other silicone monomers, the modulus and transparency of a copolymer obtained thereby, and other properties.

WO 2011/116206 and WO 2011/116210 disclose a composition having high acrylamide content froma reactive mixture containing an acrylamide monomer having a linear silicone and a hydrophilic acrylamide monomer and N,N'-methylenebisacrylamide (hereinafter referred to as MBA), which is a commercially available acrylamide crosslinker, as

a crosslinker. However, the modulus of a copolymer obtained from reactive mixtures containing MBA as the crosslinker is undesirably high. When the amount of crosslinker is decreased, the modulus is reduced, but the copolymer is no longer transparent or the lens is deformed before the modulus is sufficiently reduced, thus making it difficult to have both the low modulus and transparency and good shape.

Another problem on MBA or N, N'-propylenebisacrylamide is low "formulation stability". In the present invention, low formulation stability means that, when the amount of crosslinker is changed slightly, mechanical properties such as modulus and elongation are changed largely. Low formulation stability affects on reproducibility of mechanical properties of the copolymer and it is not suitable for commercial production. Formulation stability can be evaluated by [(the absolute value of slope of modulus)/ (parts by mass of crosslinker)] (hereinafter referred to as SMC value) and [(the absolute value of slope of elongation)/ (parts by mass of crosslinker)] (hereinafter referred to as SEC value) as described in measurement method in Examples.

SUMMARY

The present invention includes

(1) A copolymer obtained by polymerizing the following A with B:

(A) a multi-functional (meth) acrylamide monomer having at least two (meth)acrylamide groups in a molecule, and not having any silicon atoms in a molecule, wherein the shortest chain length of an organic group connecting any two (meth) acrylamide groups in the molecule satisfies one of the following conditions:

i) In the case that every nitrogen atom of the (meth)acrylamide groups has at least one hydrogen atom which is directly bonded to the nitrogen atom (case 1), the shortest chain includes 4 to 20 carbon atoms; and
ii) In the other case than the case 1, the shortest chain includes 1 to 20 carbon atoms; and

(B) a mono-functional silicone (meth)acrylamide monomer.

(2) A copolymer obtained by polymerizing a reactive mixture comprising A and B:

(A) a multi-functional (meth)acrylamide monomer having no silicon atoms, at least two (meth) acrylamide groups, and at least one organic group connecting any two of the (meth)acrylamide groups in the multi-functional (meth)acrylamide monomer, wherein the organic group having the shortest chain length of any organic group connecting any two (meth)acrylamide groups has:

i) 4 to 20 carbon atoms when every nitrogen atom of the (meth)acrylamide groups has at least one hydrogen atom which is directly bonded to each nitrogen atom in the (meth) acrylamide group; and
ii) 1 to 20 carbon atoms when at least one nitrogen atom of any (meth)acrylamide groups has no hydrogen atom directly bonded to it; and

(B) a mono-functional silicone (meth)acrylamide monomer.

(3) The copolymer according to (1) or (2), wherein the multi-functional (meth)acrylamide monomer has two (meth)acrylamide groups.

(4) The copolymer according to (3), wherein the multi-functional (meth)acrylamide monomer is represented by formula (a1): Formula:

[Chemical Formula 1]

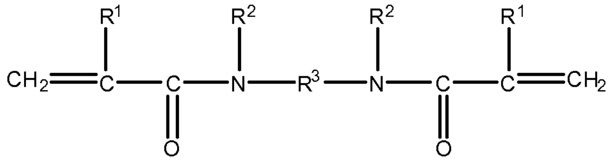

(a1)

in formula (a1), $R^1$ is independently selected from hydrogen and methyl; $R^2$ is independently selected from hydrogen, an alkyl having 1 to 20 carbon atoms, or an aryl having 6 to 20 carbon atoms; and $R^3$ is selected from an optionally substituted divalent organic group having;

i) 4 to 20 carbon atoms when $R^2$ is a hydrogen atom; or
ii) 1 to 20 carbon atoms when $R^2$ is other than a hydrogen atom.

(5) The copolymer according to (4), wherein $R^2$ in general formula (a1) is an alkyl having 1 to 20 carbon atoms.

(6) The copolymer according to (4), wherein $R^3$ in general formula (a1) is a structure of formula (b), wherein repeating unit a is an integer of 1 to 9:

$-(CH_2CH_2O)_aCH_2CH_2-$ (b).

(7) The copolymer according to any of (1) to (6), wherein the mono-functional silicone (meth) acrylamide monomer comprises at least one hydroxyl group.

(8) The copolymer according to any of (1) to (7), wherein the mono-functional silicone (meth)acrylamide monomer comprises a linear silicone.

(9) The copolymer according to any of (1) to (8), wherein the mono-functional silicone (meth)acrylamide monomer is represented by formula (a2):
Formula:

[Chemical Formula 2]

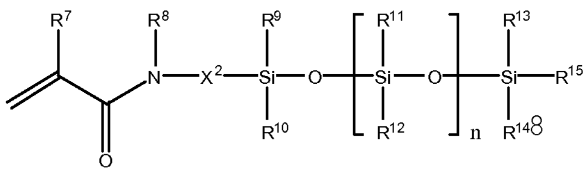

(a2)

[in formula (a2), $R^7$ is one selected from H and $CH_3$; $R^8$ is one selected from hydrogen, an alkyl which may be substituted with a hydroxyl group and has 1 to 20 carbon atoms, or an aryl which may be substituted with a hydroxyl group and has 6 to 20 carbon atoms; $R^9$ to $R^{14}$ are each independently selected from an alkyl groups having 1 to 20 carbon atoms, or an aryl groups having 6 to 20 carbon atoms; $X^2$ is a divalent organic group which may be substituted with a hydroxyl group; n is 1 to 1000; $R^{15}$ is an alkyl having 1 to 20 carbon atoms, or an aryl group having 6 to 20 carbon atoms; with the proviso that any of $R^8$ and $X^2$ has at least one hydroxyl group].

(10) The copolymer according to (9), wherein $R^7$ in general formula (a2) is hydrogen.

(11) The copolymer according to (9) or (10), wherein $R^8$ in general formula (a2) is hydrogen or an alkyl which is substituted with a hydroxyl group and has 1 to 20 carbon atoms.

(12) The copolymer according to any of (9) to (11), wherein $X^2$ in general formula (a2) is propylene or a structure represented by the following formula (c): $-CH_2CH(OH)CH_2OCH_2CH_2CH_2-$ (c).

(13) The copolymer according to (11) or (12), wherein $R^8$ is 2,3-dihydroxypropyl.

(14) The copolymer according to any of (9) to (13), wherein at least one of $R^9$ to $R^{14}$ is methyl.

(15) The copolymer according to any of (9) to (14), wherein $R^{15}$ is methyl or n-butyl.

(16) The copolymer according to any of (9) to (15), wherein n is an integer of 1 to 6 and has no distribution.

(17) The copolymer according to any of (1) to (16), further comprising a non-silicone hydrophilic monomer as a copolymerization component.

(18) The copolymer according to (17), wherein the non-silicone hydrophilic monomer is selected from the group consisting of N,N-dimethyl acrylamide (DMA), N-vinylpyrrolidone (NVP), 2-hydroxyethylacrylate, glycerolmethacrylate, 2-hydroxyethyl methacrylamide, polyethylene glycol monomethacrylate, methacrylic acid, acrylic acid, N-vinyl-N-methylacetamide, N-vinyl-N-ethylacetamide, N-vinyl-N-ethylformamide, N-vinylformamide, N-2-hydroxyethylvinyl carbamate, N-carboxy-β-alanine N-vinyl ester, a reactive polyethylene polyol, ahydrophilic vinyl carbonate, avinylcarbamatemonomer, a hydrophilic oxazolone monomer, a hydrophilic oxazoline monomer and a combination thereof.

(19) The copolymer according to any of (1) to (18), wherein the mass of the (meth)acrylamide monomer component is 50% by mass or greater based on the mass of all monomer components.

(20) The copolymer according to any of (1) to (19), wherein the multi-functional (meth)acrylamide monomer is present in an amount of about 0.1 part by mass to about 20 parts by mass.

(21) The copolymer according to any of (1) to (20), wherein the mono-functional silicone (meth)acrylamide monomer is present in an amount of about 30 parts by mass to about 98 parts by mass.

(22) The copolymer according to (1) or (2), wherein the total number of the carbon atoms in the multi-functional (meth)acrylamide monomer except for the carbon atoms of (meth)acrylamide groups is from 4 to 20.

(23) A material for medical device comprised of the copolymer according to any of (1) to (22).

(24) The material for medical device according to (23), wherein the material for medical device is any one selected from an ophthalmic lens, an endoscope, a catheter, a transfusion tube, a gas transport tube, a stent, a sheath, a cuff, a tube connector, an access port, a drainage bag, a blood circuit, a wound covering material and a medicine carrier.

(25) The material for medical device according to (24), wherein the ophthalmic lens is a contact lens.

The copolymers of the present invention may have a high acrylamide monomer content, good transparent and low modulus. The copolymer is suitably used for various kinds of medical devices, particularly ophthalmic lenses such as a contact lens, an intraocular lens, and an artificial cornea, and is especially suitable for a contact lens.

DETAILED DESCRIPTION

The term "lens" refers to ophthalmic devices that reside in or on the eye. These devices can provide optical correction, cosmetic enhancement, UV blocking and visible light or glare reduction, therapeutic effect, including wound healing, delivery of drugs or neutraceuticals, diagnostic evaluation or monitoring, or any combination thereof . The term lens includes, but is not limited to, soft contact lenses, hard contact lenses, intraocular lenses, overlay lenses, ocular inserts, and optical inserts.

"Multi-functional monomer" refers to a monomer having two or more radically polymerizable organic groups.

"Mono-functional monomer" refers to a monomer having one radically polymerizable organic group. The radically polymerizable organic group is preferably the (meth) acrylamide group.

"Radically polymerizable components" include components which contain at least one carbon-carbon double bond group which can polymerize when subjected to radical polymerization initiation conditions. Examples of polymerizable groups include acrylate, methacrylate, styryl, vinyl, allyl, N-vinyl lactam, and the like.

The phrase "(meth)acrylamide group" refers to an acrylamide group or a methacrylamide group. In some embodiments the radically polymerizable organic group is preferably an acrylamide group because of the faster polymerization rate of acrylamide monomers.

As used herein "substituted" means hydroxyl, acid, ester, ether, thiol, and combinations thereof.

As used herein "parts by mass" in the present invention represents a mass ratio based on 98.8 parts by mass of the components of the polymerizable mixture excluding the multi-functional (meth)acrylamide monomer and polymerization solvent. For example, in the formulation of Example 1, the parts by mass is calculated based upon the polymerizable mixture components except the SiBA and t-amyl alcohol.

In the present invention, the (meth)acrylamide group refers to an acrylamide group and a methacrylamide group, and the abovementioned radically polymerizable organic group is preferably an acrylamide group in terms of the polymerization rate.

In the present invention, the linear silicone refers to a structure represented by the following general formula (P1) :

[Chemical Formula 3]

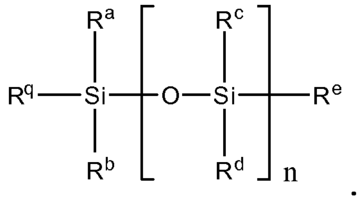

(P1)

$R^q$ is a group containing no silicon atom, and comprises a (meth)acrylamide group when the linear silicone is a linear silicone (meth) acrylamide monomer. $R^a$ to $R^e$ represent a group containing no silicon atom and may be independently selected from are substituted or unsubstituted alkyl groups having 1 to 20 carbon atoms, or substituted or unsubstituted aryl groups having 6 to 20 carbon atoms, and n represents an integer of 1 or greater, 1-1000 or 1-100. In the present invention, if a monomer has repeating units, such as poly (dimethylsiloxane), the number of the repeating units may have a distribution unless otherwise specified.

The multi-functional (meth)acrylamide monomer used for the copolymer of the present invention can be a crosslinking component, and such a compound contains a siloxane bond, and therefore imparts good mechanical characteristics and oxygen permeability to the copolymer.

In this description, the term of (meth)acryl refers to both methacryl and acryl, and the terms of (meth)acryloyl, (meth)acrylate and the like are construed alike.

In the present invention, the siloxane bond refers to a Si-O-Si bond.

A "reactive mixture" is the mixture components, including, reactive components, diluent (if used), initiators, crosslinkers and additives, which when subjected to polymer forming conditions form a polymer. "Reactive components" are the components in the reaction mixture, which upon polymerization, become a permanent part of the polymer, either via chemical bonding or entrapment or entanglement within the polymer matrix . For example, reactive monomers, prepolymers and macromers become part of the polymer via polymerization, while non-reactive polymeric internal wetting agents, such as PVP, become part of the polymer via entrapment to form an interpenetrating network. The diluent (if used) and any additional processing aids, such as deblocking agents do not become part of the structure of the polymer and are not reactive components.

Hydrophilic monomers are those which yield a clear single phase when mixed with water at 25°C at a concentration of 10 wt%.

The multi-functional monomer refers to a monomer having two or more radically polymerizable organic groups. The chain length refers to the number of atoms on or along the shortest chain between two (meth)acrylamide nitrogen atoms, and the (meth)acrylamide nitrogen atoms themselves are not counted.

In the present invention, chain length does not mean the actual spatial distance between two (meth)acrylamide nitrogen atoms but means the number of the atoms which are on the shortest route between two (meth) acrylamide nitrogen atoms. If a chain between two (meth)acrylamide nitrogen atoms has branched or substituted groups, the atoms of the branched or substituted groups are not counted as atoms of chain length. If a chain has two or more route between two (meth) acrylamide nitrogen atoms such as the case that the chain includes a cyclic structure, chain length of the chain is counted with the shortest route. The shortest chain length refers to the smallest number among the chain lengths between any of two (meth) acrylamide nitrogen atoms in a multi-functional (meth)acrylamide monomer. If a multi-functional (meth)acrylamide monomer has two or more shortest chain, at least one of the shortest chains should meet the condition for the shortest chain described in the claims of the present invention.

The mono-functional monomer refers to a monomer having one radically polymerizable organic group. The radically polymerizable organic group is preferably the (meth) acrylamide group described above.

The multi-functional (meth)acrylamide monomer used for the copolymer of the present invention has two or more (meth)acrylamide groups. The number of (meth)acrylamide groups may be selected from the following ranges 2 to 10, 2 to 6, 2 to 4, 2, because if it is too large, the modulus of the copolymer may be increased.

The shortest chain length of the multi-functional (meth) acrylamide monomer used for the copolymer of the present invention may be from 4 to 20 from 5 to 15, most 6 to 10 in the case that every nitrogen atom of the (meth)acrylamide groups has at least one hydrogen atom which is directly bonded to the nitrogen atom (case 1), because if it is too small, the modulus of the copolymer may be increased, and if it is too large, the hydrophobicity may relatively increase, leading

to a reduction in transparency of the silicone acrylamide copolymer using the hydrophilic component. Lower limit values are 4, 5, and 6. Upper limit values are 10, 15, and 20. Any of the lower limit values and any of the upper limit values can be combined together. In case 1, every nitrogen atom of the (meth) acrylamide groups has at least one hydrogen atom which is directly bonded to the nitrogen atom, so, because of the effect of hydrogen bond of the amide, the modulus of the silicone acrylamide copolymer is less easily reduced.

In the other case than the case 1, which means the case that at least one nitrogen atom of the (meth) acrylamide groups does not have any hydrogen atom which is directly bonded to the nitrogen atom, the shortest chain length of the multi-functional (meth) acrylamide monomer used for the copolymer of the present invention is from 1 to 20, from 4 to 15, or 5 to 10, because if it is too small, the modulus of the copolymer may be increased, and if it is too large, the hydrophobicitymayrelatively increase, leading to a reduction in transparency of the silicone acrylamide copolymer using the hydrophilic component. Lower limit values are 1, 4, and 5. Upper limit values are 10, 15, and 20. Any of the lower limit values and any of the upper limit values can be combined together. In this case, the multi-functional (meth)acrylamide monomer has less hydrogen atoms which is directly bonded to the nitrogen atom, so the effect of hydrogen bond of the amide is suppressed and the modulus of the silicone acrylamide copolymer is more easily reduced.

The total number of the carbon atoms in the multi-functional (meth) acrylamide monomer except for the carbon atoms of (meth) acrylamide groups is from 4 to 20, from 5 to 15, or 6 to 10, because if it is too small, the modulus of the copolymer may be increased, and if it is too large, the hydrophobicity may relatively increase, leading to a reduction in transparency of the silicone acrylamide copolymer using the hydrophilic component. Lower limit values are 4, 5, and 6. Upper limit values are 10, 15, and 20. Any of the lower limit values and any of the upper limit values can be combined together.

Preferred examples of the multi-functional (meth) acrylamide monomer used for the copolymer of the present invention include monomers represented by the following general formula (a1):

[Chemical Formula 4]

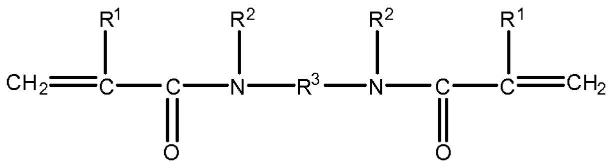

(a1)

.

In formula (a1), each $R^1$ is independently selected from hydrogen and methyl. Hydrogen may be preferable for increasing the polymerization rate of the multi-functional (meth)acrylamide monomer.

Each $R^2$ independently represents hydrogen, or a substituted or unsubstituted alkyl which having 1 to 20 carbon atoms, or a substituted or unsubstituted aryl having 6 to 20 carbon atoms. Examples thereof include hydrogen, methyl, ethyl, propyl, n-propyl, i-propyl, n-butyl, s-butyl, t-butyl, n-pentyl, i-pentyl, s-pentyl, neopentyl, hexyl, heptyl, octyl, nonyl, decyl, dodecyl, icosyl, phenyl and naphthyl. The alkyl may be branched or linear. If the number of carbon atoms of $R^2$ is too large, the hydrophobicity may relatively increase and reduce the transparency of the silicone acrylamide copolymer. Thus, where transparency is desired $R^2$ may be selected from hydrogen or an alkyl or aryl having 1 to 10 carbon atoms, or hydrogen or an alkyl having 1 to 4 carbon atoms. In addition, when the multi-functional (meth)acrylamide monomer represented by formula (a1) is obtained by synthesis, side reactions less likely to occur and the synthetic yield is high when $R^2$ is a group other than hydrogen. Therefore, $R^2$ may preferably be selected from alkyl or aryl groups having 1 to 10 carbon atoms, or alkyl groups having 1 to 4 carbon atoms.

$R^3$ represents a substituted or unsubstituted alkylene group having 4 to 20 carbon atoms when $R^2$ is a hydrogen atom, and represents substituted or unsubstituted alkylene group having 1 to 20 carbon atoms when $R^2$ is other than a hydrogen atom. If the number of carbon atoms of $R^3$ is too large, the hydrophobicity may relatively increase, leading to a reduction in transparency of the silicone acrylamide copolymer using the hydrophilic component. If the number of carbon atoms of $R^3$ is too small, the modulus of the silicone acrylamide copolymer increases, and as a result, for example, when the silicone acrylamide copolymer is used for an ophthalmic lens, wear comfort may be compromised. When $R^2$ is a hydrogen atom, the modulus of the silicone acrylamide copolymer tends to increase due to hydrogen bonding of the amide and therefore, the number of carbon atoms of $R^3$ may be 4 to 20, 5 to 15, or 6 to 10. Lower limit values are 4, 5, and 6. Upper limit values are 10, 15, and 20. Any of the lower limit values and any of the upper limit values can be combined together. When $R^2$ is other than a hydrogen atom, the effect of hydrogen bond of the amide is suppressed and the modulus of the silicone acrylamide copolymer is easily reduced. Therefore, the number of carbon atoms of $R^3$ may be 1 to 20, 4 to 15, or 5 to 10. Lower limit values are 1, 4, and 5. Upper limit values are 10, 15, and 20. Any of the

lower limit values and any of the upper limit values can be combined together.

Preferred examples of $R^3$ when $R^2$ is a hydrogen atom include butylene, pentylene, hexylene, octylene, decylene, pentadecylene, phenylene, naphthylene, anthracenyl, pyrenyl, and the group represented by the following general formula (b) :

$$-(CH_2CH_2O)_aCH_2CH_2- \qquad (b)$$

(in formula (b), a represents an integer of 1 to 9). The alkylene and arylene may be branched or linear. Among them, an alkylene which may be substituted with an ether and has 5 to 15 carbon atoms, such as pentylene, hexylene, octylene, decylene, pentadecylene, and the group represented by general formula (b) (wherein a is an integer of 1 to 6), is preferable in view of ease of obtaining a copolymer having a low modulus, and an alkylene having 5 to 10 carbon atoms such as pentylene, hexylene, octylene, and decylene is more preferable in view of compatibility with various components used for the silicone acrylamide copolymer.

Preferred examples of $R^3$ when $R^2$ is other than a hydrogen atom include methylene, ethylene, propylene, butylene, pentylene, hexylene, octylene, decylene, pentadecylene, phenylene, naphthylene, anthracenyl, pyrenyl, and the group represented by the following general formula (b):

$$-(CH_2CH_2O)_aCH_2CH_2- \qquad (b)$$

(in formula (b), a represents an integer of 1 to 9). The alkylene and arylene may be branched or linear. Among them, an alkylene which may be substituted with an ether and has 3 to 15 carbon atoms, such as propylene, butylene, pentylene, hexylene, octylene, decylene, pentadecylene, and the group represented by general formula (b) (wherein a is an integer of 1 to 6), is preferable in view of ease of obtaining a copolymer having a low modulus, and an alkylene having 5 to 10 carbon atoms such as pentylene, hexylene, octylene, and decylene is more preferable in view of compatibility with various components used for the silicone acrylamide copolymer.

The mono-functional linear silicone (meth)acrylamide monomer used for the copolymer of the present invention comprises one (meth) acrylamide group and at least one linear silicone which is terminated with a $C_1$ to $C_4$ alkyl group. Since the monomer is mono-functional, an increase in modulus by a multi-functional monomer that is used at the same time can be inhibited. Furthermore, the use of a linear silicone can improve the shape recovery. Suitable examples of the mono-functional linear silicone (meth) acrylamide monomer include monomers represented by the following general formula (z):

[Chemical Formula]

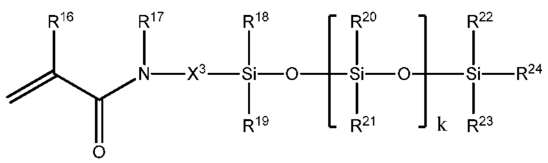

(Z)

In formula (z), $R^{16}$ is selected from hydrogen and methyl. When $R^{16}$ is hydrogen the copolymer systems display a faster polymerization rate.

$R^{17}$ represents hydrogen, or a $C_1$ to $C_{20}$ alkyl which may be substituted with a hydroxyl group, or a $C_6$ to $C_{20}$ aryl which may be substituted with a hydroxyl group, or a group represented by the following general formula (z0):

[Chemical Formula]

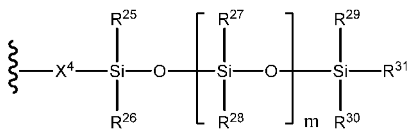

(Z0)

In formulae (z) and (z0), $R^{18}$ to $R^{23}$, and $R^{25}$ to $R^{30}$ each independently represent a $C_1$ to $C_{20}$ alkyl which may be substituted, or a $C_6$ to $C_{20}$ aryl which may be substituted. If the number of carbon atoms of $R^{18}$ to $R^{23}$ and $R^{25}$ to $R^{30}$ is too large, the content of silicon atoms may relatively decrease, leading to a reduction in oxygen permeability of the copolymer. Thus in embodiments where oxygen permeabilities greater than about 80 or 100 barrers are desired, $R^{18}$

to $R^{23}$ and $R^{25}$ to $R^{30}$ are independently selected from alkyl groups having 1 to 10 carbon atoms or aryl groups having 6 to 10 carbon atoms, preferably alkyl groups having 1 to 4 carbon atoms, and in some embodiments $R^{18}$ to $R^{23}$ and $R^{25}$ to $R^{30}$ are methyl groups.

$X^3$ and $X^4$ are independently selected from C1-C20 alkylene groups which may be substituted with hydroxyl group. If the number of carbon atoms of $X^3$ and $X^4$ is too large, the ability of the mono-functional linear silicone (meth) acrylamide monomer to compatibilize with hydrophilic components may be reduced. Thus, where it is desirable for the mono-functional linear silicone (meth) acrylamide monomer to provide compatibilization to the polymerization mixture, $X^3$ and $X^4$ are preferably a $C_1$-$C_{10}$ alkylene groups or $C_1$-$C_4$ alkylene groups which maybe substituted with hydroxyl group.

k and m are independently select from integers of 1 to 1000. Polymer systems with a desirable balance of oxygen permeability and compatibility with hydrophilic monomers and polymers can be readily obtained when k and m are 1 to 50, 2 to 30, 3 to 10, or 3 to 8.

$R^{24}$ and $R^{31}$ represent a $C_1$ to $C_{20}$ alkyl which may be substituted, or a $C_6$ to $C_{20}$ aryl which may be substituted. As the number of carbon atoms in the alkyl groups increases, the content of silicon atoms may relatively decrease, leading to a reduction in oxygen permeability of the copolymer. Thus, in embodiments where oxygen permeabilities greater than about 80 or 100 barrers are desired an alkyl having 1 to 10 carbon atoms or an aryl having 6 to 10 carbon atoms is more preferable, an alkyl having 1 to 6 carbon atoms is further preferable . When $R^{24}$ and $R^{31}$ are methyl, the polymers may display reduced stability, particularly when a carboxylic acid is included as a monomer or polymer component in the reaction mixture. In this embodiment $R^{24}$ and $R^{31}$ may be selected from alkyl groups having 2 to 4 carbon atoms.

For copolymers having oxygen permeabilities greater than about 80 and in some embodiments greater than about 100, it may be desirable to use a mono-functional linear silicone (meth)acrylamide monomer having no hydroxy groups. Examples of suitable mono-functional linear silicone (meth)acrylamide monomers include monomers represented by the following formulae (Z1) to (Z6)

[Chemical Formula 5]

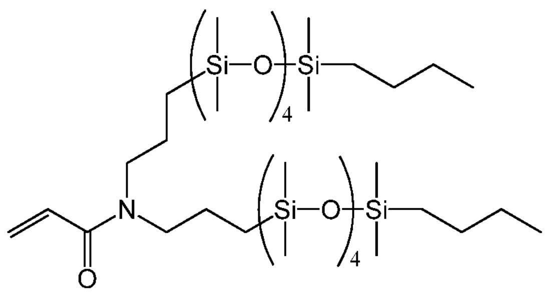

(Z1)

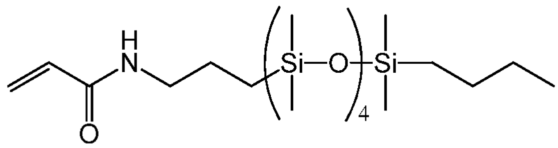

(Z2)

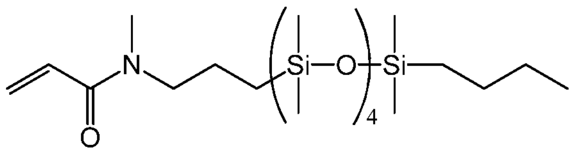

(Z3)

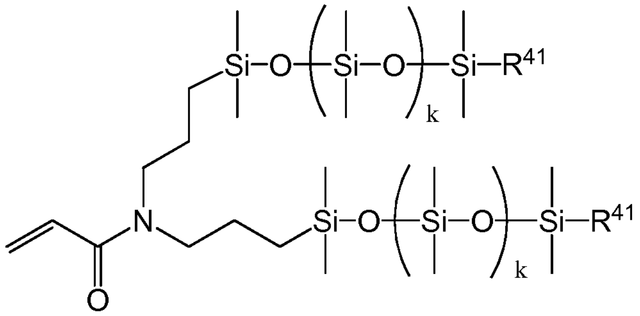

(Z4)

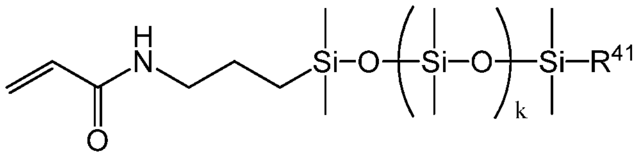

(Z5)

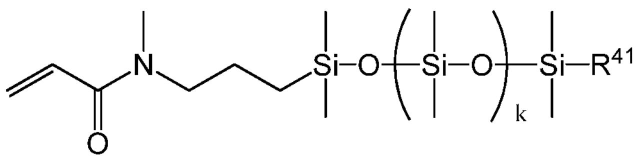

(Z6)

In formulae (Z4) to (Z6), k represents an integer of 3-12. $R^{41}$ represents a $C_1$ to $C_4$ alkyl group. Among monomers of the above formulae (Z1) to (Z6), more preferable are those of formulae (Z2) and (Z3) in a sense that compatibility can be easily obtained when the monomer is copolymerized with a hydrophilic component.

Where improved transparency and compatibility with a non-silicone hydrophilic monomer is desired, the mono-functional linear silicone (meth)acrylamide monomer used for the copolymer of the present invention may comprise at least one hydroxyl group, which is especially advantageous when used for an ophthalmic lens.

Suitable examples of the mono-functional linear silicone (meth)acrylamide monomer having a hydroxyl group include monomers represented by the following general formula (a2):

[Chemical Formula 6]

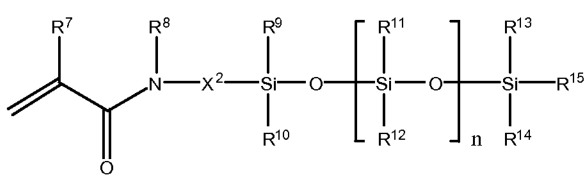

(a2)

In formula (a2) , $R^7$ is one selected from hydrogen and methyl. Among them, preferable is hydrogen for further increasing the polymerization rate.

$R^8$ represents hydrogen, or a $C_1$-$C_{20}$ alkyl or a $C_6$-$C_{20}$ aryl group either of which may be substituted with a hydroxyl group. If the number of carbon atoms of $R^8$ is too large, the silicone content may be relatively decreased and reduce the oxygen permeability. In this case, $R^8$ may be hydrogen, or a $C_1$-$C_{10}$ alkyl or $C_6$-$C_{10}$ aryl either of which may be substituted with a hydroxyl group, or hydrogen or a $C_{1-4}$ alkyl which may be substituted with a hydroxyl group. Specific examples of $R^8$ include hydrogen, 2-hydroxyethyl, 2-hydroxypropyl, 3-hydroxypropyl, 2,3-dihydroxypropyl, 4-hydroxybutyl and 2-hydroxy-1,1-bis(hydroxymethyl)ethyl. A preferred example of $R^8$, when $X^2$ has a hydroxyl group, is hydrogen. A preferred example of $R^8$, when $X^2$ has no hydroxyl group, is 2,3-dihydroxypropyl.

$R^9$ to $R^{14}$ each independently represent a $C_1$ to $C_{20}$ alkyl which may be substituted, or a $C_6$ to $C_{20}$ aryl which may be substituted. If the number of carbon atoms of $R^9$ to $R^{14}$ is too large, the content of silicon atoms may relatively decrease, leading to a reduction in oxygen permeability of the copolymer. Thus where oxygen permeabilities greater than about 80 or 100 barrers are desired, $R^9$ to $R^{14}$ are independently selected from $C_1$-$C_{10}$ alkyl groups or $C_6$-$C_{10}$ aryl groups, preferably $C_1$-$C_4$ alkyl groups, and in some embodiments $R^9$ to $R^{14}$ are methyl groups.

$X^2$ represents a $C_1$-$C_{20}$ alkylene group which may be substituted with a hydroxyl group . If the number of carbon atoms of $X^2$ is too large, the hydrophilicity may be reduced. Where it is desirable for the mono-functional linear silicone (meth)acrylamide monomer to provide compatibilization to the reactive mixture, $X^2$ may be a $C_1$-$C_{10}$ alkylene which may be substituted with hydroxy group. Preferred examples of $X^2$, when $R^9$ has a hydroxyl group, include methylene, ethylene, propylene, butylene, pentalene, octalene, decylene and phenylene. $X^2$ may be propylene where a modulus less than about 100 psi is desired.

When $R^8$ of the hydroxyl-substituted, mono-functional linear silicone (meth)acrylamide monomer does not contain at least one hydroxyl group, $X^2$ may contain at least one hydroxyl group. Examples of hydroxyl substituted $X^2$ groups include those of formula (b) and (c):

$$-CH_2CH(OH)CH_2OCH_2CH_2CH_2-$$

and the following formula (c)

$$-CH_2CH(OH)CH_2-.$$

Among them, the structure of formula (b) will provide a more flexible polymer.

n represents a natural number of 1 to 1000. Polymer systems with a desirable balance of oxygen permeability and compatibility with hydrophilic monomers and polymers can be readily obtained when n is 1 to 50, 2 to 30, 3 to 10, or 3 to 8. Any of the preferred lower limit values and any of the preferred upper limit values can be combined together. Furthermore, preferably n has no distribution in order to increase the reproducibility of the physical properties of the copolymer obtained. In the present invention, the phrase "no distribution" means that a single peak in the spectra accounts for at least 80% of the values of n, as measured by (a) GC the monomer can be measured using gas chromatography (GC) (FID analyzer), or (b) liquid chromatography (LC) (RI analyzer) for monomer having a high boiling point that cannot be measured using GC.

$R^{15}$ represents a $C_1$ to $C_{20}$ alkyl which may be substituted or a $C_6$ to $C_{20}$ aryl. As the number of carbons in the alkyl groups increase, the volume fraction of silicon atoms may relatively decrease, leading to a reduction in oxygen permeability of the copolymer. Thus, in embodiments where oxygen permeabilities greater than about 80 or 100 barrers are desired an alkyl having 1 to 10 carbon atoms or an aryl having 6 to 10 carbon atoms is more preferable, an alkyl having 1 to 6 carbon atoms is further preferable, and an alkyl having 2 to 4 carbon atoms is most preferable. When $R^{15}$ is methyl, the polymers may display reduced stability, particularly when a carboxylic acid is included as a monomeric or polymeric component in the reaction mixture. In this embodiment $R^{15}$ may be selected from $C_1$-$C_4$ alkyl groups

Where the mono-functional linear silicone (meth)acrylamide monomer is selected to provide compatibility to a system comprising both hydrophilic and hydrophobic components, at least one of $R^8$ and $X^2$ has at least one hydroxy group.

The copolymer of the present invention may also contain one or more non-silicone hydrophilic monomer as a copolymerization component in a sense that hydrophilicity or flexibility can be imparted to the copolymer. Thus, when copolymers comprising at least about 10 wt% water, or at least about 20% water are desired the reaction mixture of the present invention comprises at least one hydrophilic monomer.

Examples of the non-silicone hydrophilic monomer are known in the art and may be selected from the group consisting of a (meth)acrylamide monomer such as acrylamide, methacrylamide, N,N-dimethyl acrylamide (hereinafter referred to as DMA), N,N-dimethyl methacrylamide, 2-hydroxyethyl methacrylamide, 2-hydroxyethyl acrylamide; (meth)acrylate monomers such as 2-hydroxyethyl acrylate, glycerol methacrylate, or polyethylene glycol monomethacrylate; an N-vinyl carboxylic amide such as N-vinylpyrrolidone (NVP), N-vinyl-N-methylacetamide, N-vinyl-N-ethylacetamide, N-vinyl-N-methylformamide, N-vinyl-N-ethylformamide, N-vinylacetamide, or N-vinylformamide; an N-vinyl carbamate such as N-2-hydroxyethylvinyl carbamate, an N-vinyl ester such as N-carboxy-β-alanine N-vinylester; a hydrophilic N-vinyl carbonate; methacrylic acid, acrylic acid; a reactive polyethylene polyol, a hydrophilic oxazolone monomer, a hydrophilic oxazoline monomer and a combination thereof. Among them, the (meth)acrylamide monomer are preferable in terms of improvement of the polymerization rate. Acrylamide monomers may be preferred, and DMA may be the most preferred.

If the amount of the hydrophilic monomer that is used is too high, the oxygen permeability will be reduced, but if too low, the resulting copolymer will be too hard, and therefore the amount of the hydrophilic monomer in this embodiment is between about 1 and about 50 parts by mass, more preferably between about 10 and about 40 parts by mass, and

most preferably between 15 and 35parts by mass, based on the monomer and polymer components in the polymerization mixture. Lower limit values are about 1 part by mass, about 10 parts by mass, and about 15 parts by mass. Upper limit values are about 50 parts by mass, about 40 parts by mass, and about 35 parts by mass. Any of the lower limit values and any of the upper limit values can be combined together.

If it is desired to improve the transparency of the resulting copolymer, a (meth)acrylamide monomer having two or more hydroxyl groups and no siloxanyl groups in a molecule may be included in the reaction mixture as a hydrophilic monomer. These multihydroxy-containing (meth)acrylamide monomers may replace all or part of the hydrophilic monomer in the reaction mixture. More preferably, as the non-silicone hydrophilic monomer, one that does not correspond to the (meth)acrylamide monomer having two or more hydroxy groups in a molecule is used to combine both the monomers. Those monomers are preferably contained in an amount of 1 to 50 parts by mass of monomer and polymer components in a polymerization mixture. In the present invention, the non-silicone (meth) acrylamide monomer refers to a (meth)acrylamide monomer containing no siloxanyl group in a molecule. Examples of the non-silicone (meth)acrylamide monomer having two or more hydroxy groups in a molecule include monomers represented by the following general formulae (d1) to (d4) :

[Chemical Formula 7]

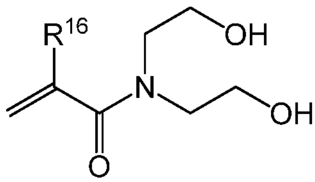
(d1)

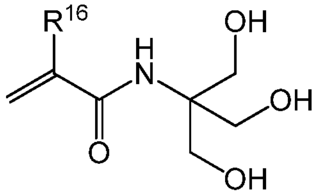
(d2)

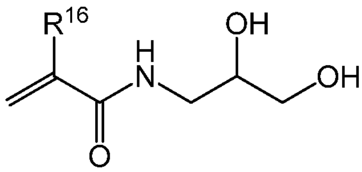
(d3)

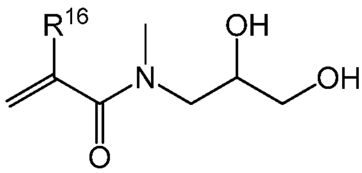
(d4)

.

In formulae (d1) to (d4), $R^1$ each independently represents hydrogen or methyl. Hydrogen is preferred in embodiments where improvement of the polymerization rate is desired. Furthermore, among these monomers, most preferable are monomers represented by formula (d1) in terms of the transparency of the resulting copolymer.

If the amount of multihydroxyl-containing (meth)acrylamide monomer is too low, the resulting copolymer may have low transparency or high modulus or both, but if the amount is too high, the resulting copolymer may have undesirably low oxygen permeability. Suitable amounts include between 1 and 50 parts by mass, between 2 and 30 parts by mass, between 3 and 20 parts by mass , and between about 5 and about 15 parts by mass, based on the monomer and polymer components in the polymerization mixture. Suitable lower limit values include about 1% by mass, about 2% by mass, about 3% by mass, and about 5% by mass. Suitable upper limit values include about 50% by mass, about 30% by mass, about 20% by mass, and about 15% by mass. Any of the preferred lower limit values and any of the preferred upper limit values can be combined together.

In the present invention, the total mass of components excluding the multi-functional (meth)acrylamide monomer

and polymerization solvent from the polymerization mixture is 98.8 parts by mass. "Parts by mass" in the present invention represents a mass ratio based on 98.8 parts by mass described above.

The amount of mono-functional silicone (meth)acrylamide monomer used for the copolymer of the present invention may be 30 parts by mass or greater, 40 parts by mass or greater, 49 parts by mass or greater as the oxygen permeability of the copolymer may be insufficient if the amount is too small and the hydrophilicity may be insufficient if the amount is too large. The amount of mono-functional silicone (meth) acrylamide monomer may be 98 parts by mass or less, 80 parts by mass or less, or 65 parts by mass.

The polymerization mixture for obtaining the copolymer of the present invention may also contain reactive and non-reactive wetting agents.

Suitable wetting agents include hydrophilic polymer with a molecular weight of about 1000 or more. The hydrophilic polymers may be incorporated into the polymerization mixture in amounts from about 1 to about 30% by weight with respect to the total amount of monomer components and polymer components. Examples of hydrophilic polymers that may be used in the copolymer of the present invention include poly-N-vinyl pyrrolidone, poly-N-vinyl-2-piperidone, poly-N-vinyl-2-caprolactam, poly-N-vinyl-3-methyl-2-caprolactam, poly-N-vinyl-3-methyl-2-piperidone, poly-N-vinyl-4-methyl-2-piperidone, poly-N-vinyl-4-methyl-2-caprolactam, poly-N-vinyl-3-ethyl-2-pyrrolidone, poly-N-vinyl-4,5-dimethyl-2-pyrrolidone, polyvinyl imidazole, poly-N-vinyl formamide, poly-N-vinyl (methyl)acetamide, poly-N-methyl-N-vinyl (methyl)acetamide, poly-N-vinyl-N-(methyl)propionamide, poly-N-vinyl-N-methyl-2-(methyl)propionamide, poly-N-vinyl-2-(methyl)propionamide, poly-N-vinyl-N,N'-dimethylurea poly-N, N-dimethyl acrylamide, poly-N,N-diethyl acrylamide, poly-N-isopropyl acrylamide, polyvinyl alcohol, polyacrylate, polyethylene oxide, poly-2-ethyl oxazoline, heparine, polysaccharide, poly-acryloyl morpholine, and mixtures and copolymers thereof. The hydrophilic polymers selected from polyvinylpyrrolidone, poly-N,N-dimethyl acrylamide, polyacrylic acid, polyvinyl alcohol, poly-N-methyl-N-vinyl (methyl)acetamide and copolymers and mixtures thereof are may be particularly effective at enhancing the wettability of certain copolymers. Polyvinylpyrrolidone and poly-N, N-dimethyl acrylamide provide a balance between the wettability of the copolymer and the compatibility to the polymerization mixture in certain formulations. Examples of suitable wetting agents are disclosed in US2006-0072069A1, US6367929 and US-2008-0045612A1.

If the amount of hydrophilic polymer that is used in the copolymer of the present invention is too low, the desired wettability may not be achieved, but if too high, the hydrophilic polymer may not easily dissolve in the polymerization mixture, and therefore the amount is between about 1 and about 30 weight%, between about 2 and about 25 weight%, between about 3 and about 20 weight%, or between about 6 and about 20 weight% of the monomer and polymer component in the polymerization mixture. Lower limit values include about 1 weight%, about 2 weight%, about 3 weight%, and about 6 weight%. Upper limit values include about 30 weight%, about 25 weight%, about 20 weight%, about 9 weight%. Any of the lower limit values and any of the upper limit values can be combined together.

If the molecular weight of the hydrophilic polymer that is used in the copolymer of the present invention is too low, desirable wettability may not be provided, but if too high, the solubility in the polymerization mixture may be inferior, and viscosity of the polymerization mixture will be increased. In one embodiment the molecular weight may be between 1000 Daltons and 10 million Daltons, between 100,000 Daltons and 1 million Daltons, and between 200, 000 and 800, 000. Where the hydrophilic polymer comprises at least one reactive group capable of covalently bonding with the copolymer matrix, the molecular weight may be at least about 2000 Daltons, at least about 5, 000 Daltons; between about 5, 000 to about 180, 000 Daltons, or between about 5, 000 to about 150, 000 Daltons. Lower limit values include about 1000 Daltons, about 100,000 Daltons, and about 200,000 Daltons. Upper limit values include about 10 million Daltons, about 1 million Daltons, and about 800, 000 Daltons. Any of the lower limit values and any of the preferred upper limit values can be combined together. The molecular weight of the hydrophilic polymer of the present invention can be expressed by the weighted average molecular weight (Mw) measured by gel permeation chromatography (column: TSK gel GMPWXL manufactured by Tosoh Corporation, mobility phase: water/methanol = 50/50, 0.1 N lithium nitrate added, flow rate: 0.5 mL/minute, detector: differential refractive index detector, molecular weight standard sample: polyethylene glycol).

The content of monomers other than the (meth)acrylamide monomer is preferably small in a sense that the polymerization rate is increased and the polymerization rates of copolymerization components are equalized to thereby obtain a copolymer having a uniform composition, and the mass of (meth) acrylamide monomer component may be 90% by mass or greater, 95% by mass or greater, 97% by mass or greater based on the mass of all monomer components. However, in the present invention, all monomer components refer to radically polymerizable monomer components, and the total of the masses of those monomer components is 100% by mass.

When the copolymer of the present invention is obtained by polymerization, at least one initiator may be added. Suitable initiators include thermal initiators and photoinitiators. When thermal polymerization is carried out, a thermal polymerization initiator having an optimum degradation characteristic at a desired reaction temperature is selected and used. Generally, an azo initiator and a peroxide initiator having a ten-hour half-life temperature of 40°C to 120°C are preferred. The photo polymerization initiators may include carbonylcompounds, peroxides, azo compounds, sulfur compounds, halogen compounds and metal salts. These polymerization initiators are used alone or in mixture, and used in

an amount of up to about 1 part by mass.

In one embodiment, the reaction mixtures of the present invention comprise at least one photoinitiator. The use of photoinitiation provides desirable cure times (time to reach essentially complete cure) of less than about 30 minutes, less than about 20 minutes and in some embodiments less than about 15 minutes. The photoinitiators may include carbonyl compounds, peroxides, azo compounds, sulfur compounds, halogen compounds and metal salts. Suitable photoinitiator systems include aromatic alpha-hydroxy ketones, alkoxyoxybenzoins, acetophenones, acylphosphine oxides, bisacylphosphine oxides, and a tertiary amine plus a diketone, mixtures thereof and the like. Illustrative examples of photoinitiators are 1-hydroxycyclohexyl phenyl ketone, 2-hydroxy-2-methyl-1-phenyl-propan-1-one, bis(2,6-dimethoxybenzoyl)-2,4-4-trimethylpentyl phosphine oxide (DMBAPO), bis(2,4,6-trimethylbenzoyl)-phenyl phosphineoxide (Irgacure 819), 2,4,6-trimethylbenzyldiphenyl phosphine oxide and 2,4,6-trimethylbenzoyl diphenylphosphine oxide, benzoin methyl ester and a combination of camphorquinone and ethyl 4-(N,N-dimethylamino)benzoate. Commercially available visible light initiator systems include Irgacure 819, Irgacure 1700, Irgacure 1800, Irgacure 1850 (all from Ciba Specialty Chemicals) and Lucirin TPO initiator (available from BASF). Commercially available UV photoinitiators include Darocur 1173 and Darocur 2959 (Ciba Specialty Chemicals) . These and other photoinitiators which may be used are disclosed in Volume III, Photoinitiators for Free Radical Cationic & Anionic Photopolymerization, 2nd Edition byJ.V. Crivello&K. Dietliker; edited by G. Bradley; John Wiley and Sons; New York; 1998. The initiator is used in the reaction mixture in effective amounts to initiate photopolymerization of the reaction mixture, e.g., from about 0.1 to about 2 parts by weight per 100 parts of reactive monomer, and in some embodiments from about 0.1 to about 1 parts by weight per 100 parts of reactive monomer.

When the copolymer of the present invention is obtained by polymerization, a polymerization solvent may be used. As a solvent, various kinds of organic and inorganic solvents can be applied. Examples thereof include water, various kinds of alcohol solvents such as methanol, ethanol, propanol, 2-propanol, butanol, tert-butanol, tert-amyl alcohol, and 3,7-dimethyl-3-octanol, various kinds of aromatic hydrocarbon solvents such as benzene, toluene and xylene, various kinds of aliphatic hydrocarbon solvents such as hexane, heptane, octane, decane, petroleum ether, kerosene, ligroin and paraffin, various kinds of ketone solvents such as acetone, methyl ethyl ketone and methyl isobutyl ketone, various kinds of ester solvents such as ethyl acetate, butyl acetate, methyl benzoate, dioctyl phthalate and ethylene glycol diacetate, and various kinds of glycol ether solvents such as diethyl ether, tetrahydrofuran, dioxane, ethylene glycol dialkyl ether, diethylene glycol dialkyl ether, triethylene glycol dialkyl ether, tetraethylene glycol dialkyl ether, polyethylene glycol dialkyl ether, polyethylene glycol-polypropylene glycol block copolymers, and polyethylene glycol-polypropylene glycol random copolymers, and they may be used alone or in mixture. Among them, alcohol solvents and glycol ether solvents are preferable in a sense that the solvent can be easily removed from the resulting copolymer by washing with water.

The copolymer of the present invention may be molded alone into a desired shape and used, or may be mixed with other materials and then molded. Furthermore, the copolymer of the present invention may also be coated on the surface of a molded product.

Applications of the copolymer of the present invention include ophthalmic lenses, endoscopes, catheters, transfusion tubes, gas transport tubes, stents, sheaths, cuffs, tube connectors, access ports, drainage bags, blood circuits, wound covering materials and various kinds of medicine carriers, but the copolymer of the present invention is particularly suitably used for ophthalmic lenses such as contact lenses, intraocular lenses, artificial corneas, cornea inlays and cornea onlays, and is most suitably for contact lenses.

When the copolymer of the present invention is molded and used as an ophthalmic lens, the following methods may be used as methods for polymerization and molding thereof: molding the copolymer into a round bar or plate and processing the same into a desired shape by cutting, lathing or the like, a mold polymerization method and a spin casting method.

A case where an ophthalmic lens comprised of the copolymer of the present invention is obtained by the mold polymerization method will now be described as an example.

A reactive mixture is dispensed in a gap formed between two molds halves having a lens shape. Photo polymerization or thermal polymerization is then carried out to form the composition into a lens shape. The molds may be made of resin, glass, ceramic, metal or the like but in the case of photo polymerization, an optically transparent material, usually resin or glass, is used. Subsequently, the filled molds are irradiated with visible light, UV light or a mixture thereof, or placed in an oven or a liquid bath and heated to polymerize the reactive mixture. Photo polymerization may also be combined with thermal polymerization such that thermal polymerization is performed before or after photo polymerization. In the case of photo polymerization, the wavelength of the light source is selected based upon the activation wavelength of the initiator. When thermal polymerization is performed, conditions of gradually raising the temperature from around 23°C to 60°C to 200°C over several hours or several tens of hours are preferred as optical homogeneity and quality of the polymer are retained and repeatability is improved.

The copolymer of the present invention can be subjected to modification by various methods. When an ophthalmic lens is intended and no hydrophilic polymer is included internally, modification particularly for improving the

wettability of the surface is preferably carried out.

Specific modification methods may include irradiation of electromagnetic waves (including light), plasma irradiation, chemical vapor deposition processes such as vapor deposition and sputtering, heating, base treatments, acid treatments, use of other appropriate surface treatment agents and a combination thereof.

One example of the base treatment or acid treatment is a method of contacting a molded product with a basic or acidic solution, a method of contacting a molded product with a basic or acidic gas, or the like. More specific methods may include, for example, a method of immersing a molded product in a basic or acidic solution, a method of spraying a basic or acidic solution or a basic or acidic gas to a molded product, a method of coating a basic or acidic solution on a molded product by a knife or brush, and a spin coating method or dip coating method of applying a basic or acidic solution to a molded product. A method providing a significant modification effect in the simplest manner is the method of immersing a molded product in a basic or acidic solution.

The temperature at which the copolymer is immersed in a basic or acidic solution is not particularly limited, but is normally in the range of about -50°C to 300°C. When considering workability, the temperature may be in the range of -10°C to 150°C, or -5°C to 60°C.

Time for immersing the copolymer in a basic or acidic solution is, generally 100 hours or less, 24 hours or less, or 12 hours or less, or 4 hours or less although optimum time varies depending on the temperature. Too long contact time may not only deteriorate workability and productivity but also have detrimental effects such as a reduction of oxygen permeability and degradation in mechanical properties.

As a base, alkali metal hydroxides, alkali earth metal hydroxides, various kinds of carbonates, various kinds of borates, various kinds of phosphates, ammonia, various kinds of ammonium salts, various kinds of amines, polymer bases such as polyethyleneimine and polyvinylamine and the like can be used. Among them, alkali metal hydroxides are most preferable because of the low cost and high treatment effect.

As an acid, various kinds of inorganic acids such as sulfuric acid, phosphoric acid, hydrochloric acid and nitric acid, various kinds of organic acids such as acetic acid, formic acid, benzoic acid and phenol and various kinds of polymer acids such as polyacrylic acid and polystyrene sulfonic acid can be used. Among them, polymer acids are most preferable because of the high treatment effect and small detrimental effects on other properties.

As a solvent of a basic or acidic solution, various kinds of inorganic and organic solvents may be used. The solvents include, for example, water, various kinds of alcohols such as methanol, ethanol, propanol, 2-propanol, butanol, ethylene glycol, diethylene glycol, triethylene glycol, tetraethylene glycol, polyethylene glycol and glycerine, various kinds of aromatic hydrocarbons such as benzene, toluene and xylene, various kinds of aliphatic hydrocarbons such as hexane, heptane, octane, decane, petroleum ether, kerosene, ligroin and paraffin, various kinds of ketones such as acetone, methyl ethyl ketone and methyl isobutyl ketone, various kinds of esters such as ethyl acetate, butyl acetate, methyl benzoate and dioctyl phthalate, various kinds of ethers such as diethyl ether, tetrahydrofuran, dioxane, ethylene glycol dialkyl ether, diethylene glycol dialkyl ether, triethylene glycol dialkyl ether, tetraethylene glycol dialkyl ether and polyethylene glycol dialkyl ether, various kinds of polar aprotic solvents such as dimethylformamide, dimethylacetamide, N-methyl-2-pyrrolidone, dimethyl imidazolidinone, hexamethyl phosphoric triamide and dimethyl sulfoxide, halogen solvents such as methylene chloride, chloroform, dichloroethane, trichloroethane and trichloroethylene, and fluorocarbon solvents. Among them, water is most preferable in terms of economic efficiency, easy handling, chemical stability and the like. As the solvent, a mixture of two or more substances can also be used.

The basic or acidic solution for use in the present invention may contain components other than a basic or acidic substance and a solvent.

After the copolymer is subjected to a base treatment or acid treatment, a basic or acidic substance can be removed by washing.

As a washing solvent, various kinds of inorganic and organic solvents maybe used. The solvents include, for example, water, various kinds of alcohols such as methanol, ethanol, propanol, 2-propanol, butanol, ethylene glycol, diethylene glycol, triethylene glycol, tetraethylene glycol, polyethylene glycol and glycerine, various kinds of aromatic hydrocarbons such as benzene, toluene and xylene, various kinds of aliphatic hydrocarbons such as hexane, heptane, octane, decane, petroleum ether, kerosene, ligroin and paraffin, various kinds of ketones such as acetone, methyl ethyl ketone and methyl isobutyl ketone, various kinds of esters such as ethyl acetate, butyl acetate, methyl benzoate and dioctyl phthalate, various kinds of ethers such as diethyl ether, tetrahydrofuran, dioxane, ethylene glycol dialkyl ether, diethylene glycol dialkyl ether, triethylene glycol dialkyl ether, tetraethylene glycol dialkyl ether and polyethylene glycol dialkyl ether, various kinds of polar aprotic solvents such as dimethylformamide, dimethylacetamide, N-methyl-2-pyrrolidone, dimethyl imidazolidinone, hexamethyl phosphoric triamide and dimethyl sulfoxide, halogen solvents such as methylene chloride, chloroform, dichloroethane, trichloroethane and trichloroethylene, and fluorocarbon solvents.

As the washing solvent, a mixture of two or more solvents can also be used. The washing solvent may contain components other than a solvent, for example, inorganic salts, surfactants and washing agents. Aqueous washing solvents containing at least about 50%, 75% or 90% water may be used.

The above mentioned modification may be applied to the entire copolymer or may be applied to a part of the

copolymer such as, for example, only the surface. When the modification is applied to only the surface, only the wettability of the surface can be improved without significantly changing the properties of the entire copolymer.

The water content of the copolymer of the present invention may be 20 weight% or greater, 25 weight% or greater, 30 weight% or greater. If the water content is too high, the article, such as a contact lens, may dehydrate during use. In these embodiments, depending upon the other components, it may be desireable for the water content to be less than 75 weight%, or less than about 60 weight%. These ranges may be combined in any combination.

Here, the water content is given by

$$[((\text{mass in wet state}) - (\text{mass in dry state})) / (\text{mass in wet state})] \times 100$$

from the mass of a copolymer sample in a dry state and the mass when wiping off surface water of a specimen in a wet state by a borate buffer (mass in wet state).

In this description, the wet state refers to a state after immersing a sample in pure water or a borate buffer at room temperature (23°C) for 24 hours or longer. Measurements of physical properties in the wet state are made as soon as possible after the sample is taken out from pure water or a borate buffer.

In the description, the dry state refers to a state after drying in a vacuum drier at 40°C for 16 hours or longer.

The synthetic yield of the multi-functional (meth) acrylamide monomer used for the copolymer of the present invention is 3% or greater, 10% or greater, 20% or greater as the economic efficiency is compromised if it is too low.

When an ophthalmic lens, particularly a soft contact lens is intended, the Young's modulus of the copolymer of the present invention may be about 150 psi or less, about 110 psi or less, or about 100 psi or less.

The elasticity (elongation) of the copolymer of the present invention may be about 220% or greater, about 250% or greater, about 270% or greater as the copolymer is hard to be broken if the elasticity is high.

The elastic modulus and elasticity are measured on a hydrated sample using the following method. A sample is cut from the center of a -1.00 lens, where the width of the narrowest section is 5 mm, and then stretching at a rate of 100 mm/minute and a temperature of 25C using a tensile tester until it breaks. The initial gauge length of the sample (Lo) and sample length at break (Lf) are measured. Twelve specimens of each composition are measured and the average is reported. Tensile modulus is measured at the initial linear portion of the stress/strain curve . Percent elongation is = [(Lf - Lo)/Lo]x 100.

In the present invention, low "formulation stability" means that, when the amount of crosslinker is changed slightly (0.1 part by mass change), mechanical properties such as modulus and elongation change substantially, for example by more than about 11 psi change in modulus, or 40% change in elongation. Copolymers with low formulation stability display poor reproducibility of mechanical properties, and are thus not suitable for commercial production of medical devices, such as contact lenses.

Copolymers of the present invention having high formulation stability will have absolute values of the slope of modulus/ parts by mass of crosslinker (hereinafter referred to as SMC value). SMC value of the copolymer of the present invention may be about 110 or lower, about 100 or lower, or about 95 or lower for high formulation stability of the copolymer. the absolute value of the slope of elongation/ parts by mass (hereinafter referred to as SEC value) of crosslinker of the copolymer of the present invention is preferably 400 or lower, more preferably 350 or lower, most preferably 300 or lower for high formulation stability of the copolymer.

Alternatively, high formulation stability copolymers of the present invention may be characterized by SEC value of crosslinker of the copolymer. Desirable SEC values include about 220 or lower, about 200 or lower, or about 150 or lower.

Examples of component ranges which provide copolymers having desirable SMC and SEC values are shown in Table 1, below.

Table 1

| Component | Parts by mass | | |
|---|---|---|---|
| mono-functional linear silicone (meth)acrylamide monomer | 40-80 | 49-65 | 50-60 |
| non-siliconehydrophilicmonomer | 10-40 | 15-35 | 20-30 |
| multihydroxyl-containing (meth)acrylamide monomer | 2-30 | 3-20 | 4-10 |
| Hydrophilic polymer | 0-25 | 3-20 | 4-10 |
| Initiator | 0.1-2 | 0.1-1 | 0.1-0.5 |

(continued)

| Component | Parts by mass | | |
|---|---|---|---|
| UV absorber | 0-4 | 0-3 | 0.2.5 |

The total parts by mass of the components described above is 98.8 parts by mass.

The formulations above may also include one or more polymerization solvents and optional components including one or more crosslinkers, wetting agents, such as those disclosed in US 6,367,929, WO03/22321, and WO03/22322, wetting agents containing at least one radically polymerizable organic group, ultra-violet absorbing compounds, medicinal agents, antimicrobial compounds, copolymerizable and nonpolymerizable dyes, including dyes and compounds which reversibly change color or reflect light when exposed to various wavelengths of light, release agents, reactive tints, pigments, combinations thereof and the like.

When an ophthalmic lens is intended, the advancing contact angle of the copolymer of the present invention may be about 70° or less, about 60° or less, or about 50° or less. The dynamic contact angle is measured as the angle of a borate buffer with a sample in a wet state by the borate buffer.

For the oxygen permeability of the copolymer of the present invention, the oxygen permeability coefficient may be about $70 \times 10^{-11}$ ($cm^2$/sec) mL $O_2$ / (mL•hPa) greater. The oxygen permeability coefficient is measured in a sample in a wet state by pure water.

For the transparency of the copolymer of the present invention, when an ophthalmic lens is intended, the transmissivity in a water-containing state of the ophthalmic lens is about 85% or greater, about 88% or greater, or about 91% or greater.

For the transparency of the copolymer of the present invention by visual observations, in the case of the evaluation method described in examples, A or B, of evaluation criteria A to D, is preferable, and A is more preferable.

For the shape of the copolymer of the present invention by visual observations, in the case of the evaluation method described in examples, A or B, of evaluation criteria A to C, is preferable, and A is more preferable.

The copolymer of the present invention is suitable as a material for medical device and more specifically, especially suitable for medical devices such as ophthalmic lenses, endoscopes, catheters, transfusion tubes, gas transport tubes, stents, sheaths, cuffs, tube connectors, access ports, drainage bags, blood circuits, wound covering materials and various kinds of medicine carriers, particularly contact lenses, intraocular lenses, artificial corneas and the like.

EXAMPLES

The present invention will now be described in detail by examples, but the present invention is not thereby limited.

Measurement Methods

In this description, the borate buffer refers to the "salt solution" described in Example 1 of National Publication of International Patent Application No. 2004-517163. Specifically, the borate buffer is an aqueous solution prepared by dissolving 8.48 g of sodium chloride, 9.26 g of boric acid, 1.0 g of sodium borate (sodium tetraborate decahydrate) and 0.10 g of ethylene diamine tetraacetic acid in pure water to make up 1000 mL volume.

(1) Transmissivity

Measurements were made using SM Color Computer (Model SM-7-CHmanufactured by SugaTest Instruments Co., Ltd.). Water on a lens-shaped sample was lightly wiped off and the sample was set on an optical path to make a measurement. The thickness was measured using ABC Digimatic Indicator (ID-C112 manufactured by Mitutoyo Corporation), and samples having a thickness of 0.14 to 0.15 mm were used for the measurement.

(2) Elastic modulus, tensile elongation (rupture elongation)

A hydrated sample (in borate buffer) was used to make a measurement. A specimen having a width (minimum part) of 5 mm, a length of 14 mm and a thickness of 0.2 mm was cut out from a contact lens-shaped sample using a cutting die. With the specimen, a tensile test was carried out at 25 °C using RTG-1210 Model Tester (Load Cell UR-10N-D Model) manufactured by Orientec Co., Ltd. The tensile speed was 100 mm/minute and the distance between grips (initial) was 5 mm. Furthermore, in the case of a film-shaped sample, a measurement was made in the same manner using a specimen having a size of about 5 mm $\times$ 20 mm $\times$ 0.1 mm.

(3) Water content

A contact lens-shaped specimen was used. The specimen was immersed in a borate buffer and left standing in a temperature-controlled room at 23°C for 24 hours or longer to absorb water, followed by wiping off surface water with a wiping cloth ("Kimwipes" (registered trademark) manufactured by NIPPON PAPER CRECIA Co., LTD.) and measuring the mass (Ww). Thereafter, the specimen was dried in a vacuum drier at 40°C for 16 hours, and the mass (Wd) was measured. The water content was determined from the following equation. Water content (% by mass) = 100 $\times$ (Ww - Wd) / Ww

(4) Dynamic contact angle

A measurement was made with a sample in a wet state by a borate buffer. Using as a dynamic contact angle sample a film-shaped specimen having a size of about 5 mm $\times$ 10 mm $\times$ 0.1 mm, which was cut out from a sample molded in a film form or a strip-shaped specimen having a width of 5 mm, which was cut out from a contact lens-shaped sample, the dynamic contact angle at advance with respect to a borate buffer was measured at 25 °C. The immersion rate was 0.1 mm/sec and the immersion depth was 7 mm.

(5) Stress zero time

A measurement was made with a sample in a wet state by a borate buffer. A strip-shaped sample having a width of 5 mm and a length of about 1.5 cm was cut out from a lens at or near its center, and a measurement was made using Rheometer CR-500 DX manufactured by Sun Scientific Co., Ltd. The sample was attached to a chuck with a width set to 5 mm and drawn over a distance of 5 mm at a speed of 100 mm/minute, followed by returning the sample to an initial length (5 mm) at the same speed. The measurement was repeated three times. The length of time between a time point at which the stress became zero in the course of returning the sample to the initial length at the second repetition and a time point at which the stress emerged (no longer zero) after starting drawing at the third repetition was determined and designated as a stress zero time. It is shown that the shorter the stress zero time, the better the shape recovery of a silicone hydrogel, and the stress zero time is preferably 2 seconds or less, more preferably 1.5 seconds or less, most preferably 1.2 seconds or less.

(6) Transparency

The transparency of a sample in a hydrated state (borate buffer) was visually observed, and was evaluated according to the following criteria.

A: transparent with no turbidness
B: white turbidness at some midpoint between A and C
C: translucent with slight white turbidness
D: no transparency with white turbidness

(7) Shape

The shape of a sample in a wet state by a borate buffer was visually observed, and was evaluated according to the following criteria.

A: good shape with no distortion
B: distortion at some midpoint between A and C
C: poor shape with distortion

(8) SMC value

At least two data points of modulus (psi) which are less than 300psi are plotted versus parts by mass of crosslinker in a graph. A line is made between the two data points if two data points were plotted, or a line is made by least mean squares method if three or more data points were plotted. The preferred number of data points is two to four, and more preferred number is three. The absolute value of slope of the line is SMC value.

(9) SEC value

At least two data points of elongation (%) which are more than 50% are plotted versus parts by mass of crosslinker in a graph. A line is made between the two data points if two data points were plotted, or a line is made by least mean squares method if three or more data points were plotted. The preferred number of data points is two to four, and more preferred number is three. The absolute value of slope of the line is SEC value.

<Synthesis Examples>

Synthesis Example 1

In a 200 mL three-necked flask, 2 g (19.6 mmol) of 1,5-diaminopentane manufactured by Wako Pure Chemical Industries, Ltd., 4.35 g (43.0 mmol) of triethylamine, 50 mL of ethyl acetate and 10 mL of IPA were each weighed and mixed. In a dropping funnel, 3.89 g (43.0 mmol) of acryloyl chloride and 40 mL of ethyl acetate were weighed and mixed. The flask was set in an ice salt bath and the mixture was added dropwise at -5 to 0°C for an hour and 20 minutes. The reaction was traced by GC with the dropping termination time as a start point. A 1,5-diaminopentane peak almost disappeared at a reaction time of 4 hours, and therefore the reaction was terminated. By filtration using a Kiriyama funnel, a precipitate was removed while washing with ethyl acetate. 3,5-Dibutyl-4-hydroxytoluene was added to the filtrate, and the mixture was concentrated in a water bath thermally controlled to 30°C for about 20 minutes using a rotary evaporator. The resulting crude product was refined by a silica gel column (column solvent: ethanol/ethylacetate (1/20, 1/10) mixed solvent (v/v)) to obtain a bisacrylamide (C5) represented by the following formula (M1):

[Chemical Formula 11]

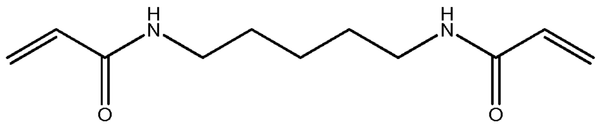

(M1)

.

The yield after column refinement was as shown in Table 1.

[Table 1]

| | Formula | Chain length | Carbon atoms * | Crosslinker | Yield (%) |
|---|---|---|---|---|---|
| Synthesis Example 1 | (M1) | 5 | 5 | C5 | 4 |
| Synthesis Example 2 | (M2) | 6 | 6 | M-C6 | 28 |
| Synthesis Example 3 | (M3) | 8 | 8 | M-C8 | 27.7 |
| Synthesis Example 4 | (M4) | 8 | 6 | M-3G | 26.7 |
| Synthesis Example 5 | (M5) | 3 | 3 | C3 | 12 |
| Synthesis Example 6 | (M6) | 8 | 8 | C8 | 3.8 |
| * Carbon atoms = the number of carbon atoms in the shortest chain | | | | | |

Synthesis Example 2

In a 200 mL three-necked flask, 2 g (13.9 mmol) of N,N'-dimethyl-1,6-hexanediamine manufactured by Tokyo Chemical Industry Co., Ltd., 2.81 g (27.8 mmol) of triethylamine and 30 mL of ethyl acetate were each weighed and mixed. In a dropping funnel, 2.52 g (27.8 mmol) of acryloyl chloride and 50 mL of ethyl acetate were weighed and mixed. The flask was set in an ice salt bath and the mixture was added dropwise at -5 to 0°C for 2 hours and 30 minutes. The reaction was traced by GC with the dropping termination time as a start point. A N,N'-dimethyl-1,6-hexanediamine peak almost disappeared at a reaction time of 4 hours, and therefore the reaction was terminated. By filtration using a Kiriyama funnel, a precipitate was removed while washing with ethyl acetate. 3,5-Dibutyl-4-hydroxytoluenewas added to the filtrate, and the mixture was concentrated in a water bath thermally controlled to 30°C for about 20 minutes using a rotary evaporator. The resulting crude product was refined by a silica gel column (column solvent: chloroform/ethyl acetate

(30/1, 20/1, 10/1, 5/1) mixed solvent (v/v)) to obtain a bisacrylamide (M-C6) represented by the following formula (M2):

[Chemical Formula 12]

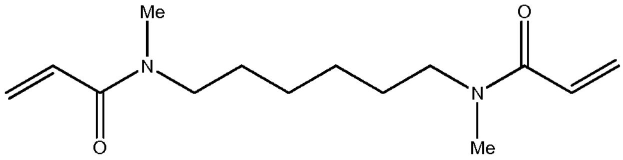

(M2)

.

The yield after column refinement was as shown in Table 1.

Synthesis Example 3

In a 200 mL three-necked flask, 0.8 g (4.64 mmol) of N,N'-dimethyl-1,8-octanediamine manufactured by Sigma-Aldrich Corporation, 1.01 g (10 mmol) of triethylamine and 50 mL of ethyl acetate were each weighed and mixed. In a dropping funnel, 0.91 g (10 mmol) of acryloyl chloride and 50 mL of ethyl acetate were weighed and mixed. The flask was set in an ice salt bath and the mixture was added dropwise at -5 to 0°C for an hour. The reaction was traced by GC with the dropping termination time as a start point. Disappearance of an N,N'-dimethyl-1,8-octanediamine peak was observed at a reaction time of 0 hour, and therefore the reaction was terminated. By filtration using a Kiriyama funnel, a precipitate was removed while washing with ethyl acetate. 3,5-Dibutyl-4-hydroxytoluene was added to the filtrate, and the mixture was concentrated in a water bath thermally controlled to 30°C for about 10 minutes using a rotary evaporator. The resulting crude product was refined by a silica gel column (column solvent: ethanol/ethylacetate (1/20, 1/10) mixed solvent (v/v)) to obtain a bisacrylamide (M-C8) represented by the following formula (M3):

[Chemical Formula 13]

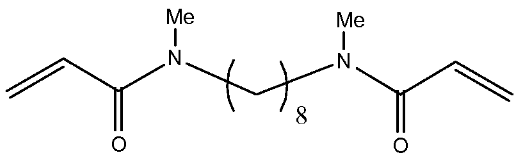

(M3)

.

The yield after column refinement was as shown in Table 1.

Synthesis Example 4

In a 200 mL three-necked flask, 1 g (5.67 mmol) of 1,8-bis(methylamino)-3,6-dioxaoctane manufactured by Acros Organics, 1.15 g (11.34 mmol) of triethylamine and 15 mL of ethyl acetate were each weighed and mixed. In a dropping funnel, 1.03 g (11.34 mmol) of acryloyl chloride and 15 mL of ethyl acetate were weighed and mixed. The flask was set in an ice salt bath and the mixture was added dropwise at -5 to 0°C for an hour. The reaction was traced by GC with the dropping termination time as a start point. A 1,8-bis(methylamino)-3,6-dioxaoctane peak almost disappeared at a reaction time of an hour, and therefore the reaction was terminated. By filtration using a Kiriyama funnel, a precipitate was removed while washing with ethyl acetate. 3,5-Dibutyl-4-hydroxytoluene was added to the filtrate, and the mixture was concentrated in a water bath thermally controlled to 30°C for about 10 minutes using a rotary evaporator. The resulting crude product was refined by a silica gel column (column solvent: ethanol/ethyl acetate (1/3, 1/5) mixed solvent (v/v)) to obtain a bisacrylamide (M-3G) represented by the following formula (M4):

[Chemical Formula 14]

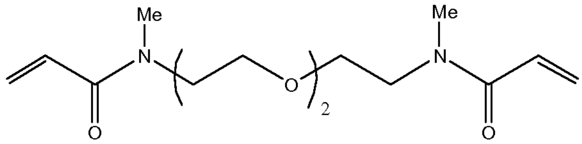

(M4)

.

The yield after column refinement was as shown in Table 1.

Synthesis Example 5

In a 200 mL three-necked flask, 2 g (27 mmol) of 1,3-propanediamine manufactured by Wako Pure Chemical Industries, Ltd., 6.01 g (59.4 mmol) of triethylamine and 30 mL of ethyl acetate were each weighed and mixed. In a dropping funnel, 5.38 g (59.4 mmol) of acryloyl chloride and 30 mL of ethyl acetate were weighed and mixed. The flask was set in an ice salt bath and the mixture was added dropwise at -5 to 0°C for 3 hours and 30 minutes. The reaction was traced by GC with the dropping termination time point as a start point. A 1,3-propanediamine peak almost disappeared at a reaction time of 3 hours, and therefore the reaction was terminated. By filtration using a Kiriyama funnel, a precipitate was removed while washing with ethyl acetate. 3,5-Dibutyl-4-hydroxytoluene was added to the filtrate, and the mixture was concentrated in a water bath thermally controlled to 30°C for about 20 minutes using a rotary evaporator. The resulting crude product was refined by a silica gel column (column solvent: ethanol/ethylacetate (1/20, 1/10) mixed solvent (v/v)) to obtain a bisacrylamide (C3) represented by the following formula (M5):

[Chemical Formula 10]

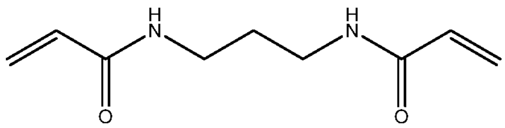

(M5)

.

The yield after column refinement was as shown in Table 1.

Synthesis Example 6

In a 200 mL three-necked flask, 3.9 g (27 mmol) of 1,8-propanediamine, 6.01 g (59.4 mmol) of triethylamine and 30 mL of ethyl acetate were each weighed and mixed. In a dropping funnel, 5.38 g (59.4 mmol) of acryloyl chloride and 30 mL of ethyl acetate were weighed and mixed. The flask was set in an ice salt bath and the mixture was added dropwise at -5 to 0°C for 3 hours and 30 minutes. The reaction was traced by GC with the dropping termination time point as a start point. A 1,8-propanediamine peak almost disappeared at a reaction time of 3 hours, and therefore the reaction was terminated. By filtration using a Kiriyama funnel, a precipitate was removed while washing with ethyl acetate. 3,5-Dibutyl-4-hydroxytoluene was added to the filtrate, and the mixture was concentrated in a water bath thermally controlled to 30°C for about 20 minutes using a rotary evaporator. The resulting crude product was refined by a silica gel column (column solvent: ethanol/ethylacetate (1/20, 1/10) mixed solvent (v/v)) to obtain a bisacrylamide (C8) represented by the following formula (M6):

[Chemical Formula 10]

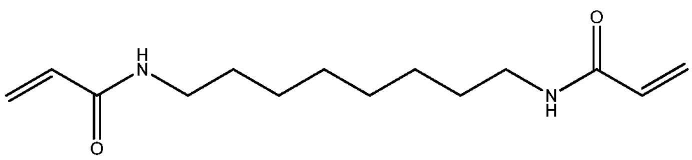

(M6)

.

The yield after column refinement was as shown in Table 1.

Example 1

The bisacrylamide C5 (0.026 g, 1.1 parts by mass) obtained in Synthesis Example 1, a mono-functional linear silicone acrylamide monomer represented by the following formula (X1):

[Chemical Formula 15]

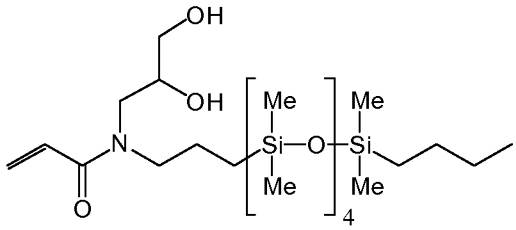

(X1)

(0.462 g, 56.06 parts by mass), DMA (0.208 g, 25.27 parts by mass), a non-silicone acrylamide monomer represented by the following formula (H1):

[Chemical Formula 16]

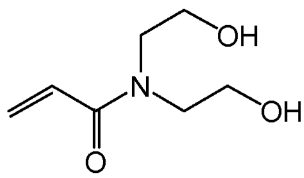

(H1)

(0.058 g, 7 parts by mass), polyvinyl pyrrolidone (PVP K90, 0.066 g, 8 parts by mass), a UV absorber 2-(2'-hydroxy-5'-methacryloyloxyethylphenyl)-2H-benzotriazo le (0.018 g, 2.22 parts by mass), t-amyl alcohol (TAA, 0.681 g) and a photoinitiator irgacure 819 (0.002 g, 0.25 part by mass) were mixed and stirred. The resulting polymerization mixture was degassed in argon environment. In a glove box in a nitrogen environment, the polymerization mixture was filled in a gap of a mold made of transparent resin having a lens shape (front curve side: ZEONOR, base curve side: polypropylene), and irradiated with light (Philips TL 03, 1.6 mW/$cm^2$, 15 minutes) and thereby hardened to obtain a lens. The lens obtained was immersed in a 70% (volume ratio) 2-propanol (IPA) aqueous solution at 23°C for 70 minutes to thereby demold the lens from the mold and extract impurities such as residual monomers. The lens was immersed in water for 10 minutes, and thereafter immersed in a borate buffer (pH 7.1 to 7.3) in a 5 mL vial, and the vial was placed in an autoclave and boiled at 120°C for 30 minutes.

The transmissivity, water content, modulus, elasticity and stress zero time of the obtained lens-shaped sample were as shown in Table 2, and lenses well extendable with a low modulus were obtained.

[Table 2]

Table 2

| | bisacrylamide | | | transmissivity (%) | water content (%) | modulus (psi) | elongation (%) | stress zero time (sec) | transparency | shape | SMC value | SEC value |
|---|---|---|---|---|---|---|---|---|---|---|---|---|
| | formula | parts by mass | mass average molecular weight | | | | | | | | | |
| Example 1 | Formula (M1) | 1.10 | 210 | 90.9 | 39.4 | 91.2 | 235.6 | 0.92 | A | B | 92 | 237 |
| Example 2 | Formula (M1) | 0.90 | 210 | 90.2 | 42.1 | 71.2 | 346 | 0.96 | B | C | | |
| Example 3 | Formula (M1) | 1.50 | 210 | 90.9 | 37.6 | 126.9 | 191.3 | 0.89 | A | A | | |
| Example 4 | Formula (M2) | 1.10 | 252 | 91.6 | 37.9 | 121.7 | 215.6 | 0.94 | A | B | 92 | 112 |
| Example 5 | Formula (M2) | 1.80 | 252 | 91.9 | 35.5 | 186.1 | 137.4 | 0.91 | A | A | | |
| Example 6 | Formula (M3) | 1.00 | 280 | 92.3 | 39.7 | 94.7 | 241.8 | 0.89 | A | B | 60 | 129 |
| Example 7 | Formula (M3) | 1.10 | 280 | 91.5 | 39 | 100.7 | 228.9 | 0.95 | A | B | | |
| Example 8 | Formula (M4) | 1.10 | 284 | 91.1 | 39.5 | 79.4 | 280.8 | 1.03 | C | C | 95 | 10 |
| Example 9 | Formula (M4) | 1.30 | 284 | 89.1 | 38.5 | 99.2 | 304 | 0.89 | B | C | | |
| Example 10 | Formula (M4) | 1.50 | 284 | 90.2 | 37.6 | 117.2 | 277 | 0.95 | B | B | | |
| Example 11 | Formula (M7) | 0.80 | 224 | 91.5 | 39 | 90.7 | 322.7 | 0.95 | B | C | 83 | 326 |
| Example 12 | Formula (M7) | 1.10 | 224 | 91.7 | 37.4 | 115.7 | 225 | 0.93 | A | B | | |
| Comparative Example 1 | Formula (M8) | 1.10 | 154 | 91.3 | 37.9 | 141 | 176.2 | 1.01 | A | A | - | - |

(continued)

| | bisacrylamide | | | transmissivity (%) | water content (%) | modulus (psi) | elongation (%) | stress zero time (sec) | transparency | shape | SMC value | SEC value |
|---|---|---|---|---|---|---|---|---|---|---|---|---|
| | formula | parts by mass | mass average molecular weight | | | | | | | | | |
| Comparative Example 2 | Formula (M5) | 1.10 | 182 | 91.4 | 38.5 | 124.3 | 187.4 | 0.84 | A | A | | |
| Comparative Example 3 | Formula (M5) | 0.90 | 182 | 92.5 | 39.6 | 102.1 | 267.7 | 0.85 | A | C | 111 | 402 |
| Comparative Example 4 | Formula (M5) | 1.00 | 182 | 92.2 | 39.5 | 112.2 | 214.2 | 0.94 | A | B | | |

Examples 2 to 10

A lens-shaped sample was obtained by carrying out polymerization in the same manner as in Example 1 except that the kind and amount of crosslinker used were changed as in Table 2. The appearance, transmissivity, water content, modulus, elasticity and stress zero time of the obtained lens-shaped sample were as shown in Table 2.

Examples 11 and 12

A lens-shaped sample was obtained by carrying out polymerization in the same manner as in Example 1 except that 1.1 parts by mass of C6 which is commercially available and represented by the following formula (M7):

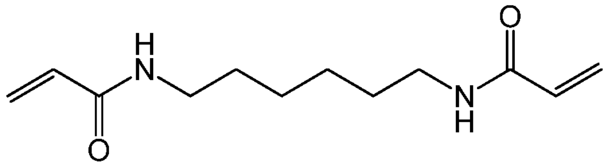 (M7)

was used as a bisacrylamide monomer (chain length:6, carbon atoms:6) instead of C5 obtained in Synthesis Example 1. The appearance, transmissivity, water content, modulus, elasticity and stress zero time of the obtained lens-shaped sample were as shown in Table 2.

Comparative Example 1

A lens-shaped sample was obtained by carrying out polymerization in the same manner as in Example 1 except that 1.1 parts by mass of N,N'-methylenebisacrylamide (MBA) which is commercially available and represented by the following formula (M8):

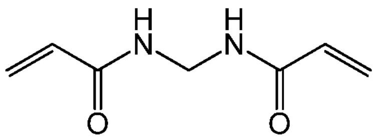 (M8)

was used as a bisacrylamide monomer (chain length:1, carbon atoms:1) instead of C5 obtained in Synthesis Example 1. The appearance, transmissivity, water content, modulus, elasticity and stress zero time of the obtained lens-shaped sample were as shown in Table 2.

Comparative Examples 2 to 4

A lens-shaped sample was obtained by carrying out polymerization in the same manner as in Example 1 except that C3 obtained in Synthesis Example 5 in an amount (parts by mass) shown in Table 2 was used as a bisacrylamide monomer instead of C5 obtained in Synthesis Example 1. The appearance, transmissivity, water content, modulus, elasticity and stress zero time of the obtained lens-shaped sample were as shown in Table 2.

## Claims

**1.** A copolymer obtained by polymerizing a reactive mixture comprising A and B:

(A) a multi-functional (meth)acrylamide monomer having no silicon atoms, at least two (meth)acrylamide groups, and at least one organic group connecting any two of the (meth)acrylamide groups in the multi-functional (meth)acrylamide monomer, wherein the organic group having the shortest chain length of any organic group connecting any two (meth)acrylamide groups has:

1) 4 to 20 carbon atoms when every nitrogen atom of the (meth)acrylamide groups has at least one hydrogen atom which is directly bonded to each nitrogen atom in the (meth)acrylamide group; or
2) 1 to 20 carbon atoms when at least one nitrogen atom of any (meth)acrylamide groups has no hydrogen

atom directly bonded to it; and

(B) a mono-functional silicone (meth)acrylamide monomer.

**2.** The copolymer according to claim 1, wherein the multi-functional (meth)acrylamide monomer has two (meth)acrylamide groups.

**3.** The copolymer according to claim 2, wherein the multi-functional (meth)acrylamide monomer is represented by formula (a1):

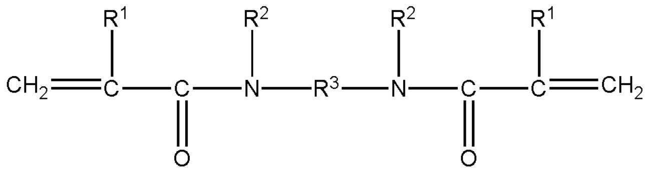

(a1)

wherein $R^1$ is independently selected from hydrogen and methyl; $R^2$ is independently selected from hydrogen, or an alkyl having 1 to 20 carbon atoms, or an aryl having 6 to 20 carbon atoms; and $R^3$ is selected from substituted or unsubstituted alkylene group having;

i) 4 to 20 carbon atoms when $R^2$ is a hydrogen atom; or
ii) 1 to 20 carbon atoms when $R^2$ is other than a hydrogen atom.

**4.** The copolymer according to claim 3, wherein $R^2$ in general formula (a1) is an alkyl having 1 to 20 carbon atoms; and/or wherein $R^3$ in general formula (a1) is a structure represented by the following formula (b), wherein repeating unit a is an integer of 1 to 9:

$-(CH_2CH_2O)_aCH_2CH_2-$ (b).

**5.** The copolymer according to any of claims 1 to 4,

(i) wherein the mono-functional silicone (meth)acrylamide monomer has at least one hydroxyl group, and/or
(ii) wherein the mono-functional silicone (meth)acrylamide monomer has a linear silicone, and/or
(iii) the mono-functional silicone (meth)acrylamide monomer is represented by formula (a2):

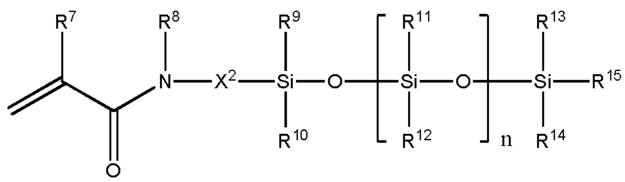

(a2)

wherein, $R^7$ is selected from H and $CH_3$; $R^8$ is selected from the group consisting of hydrogen, an alkyl which may be substituted with a hydroxyl group and has 1 to 20 carbon atoms, or an aryl which may be substituted with a hydroxyl group and has 6 to 20 carbon atoms; $R^9$ to $R^{14}$ are each independently selected from the group consisting of an alkyl having 1 to 20 carbon atoms, or an aryl having 6 to 20 carbon atoms; $X^2$ is a divalent organic group which may be substituted with a hydroxyl group and has 1 to 20 carbon atoms; n is an integer of 1 to 1000; $R^{15}$ is an alkyl having 1 to 20 carbon atoms, or an aryl having 6 to 20 carbon atoms; with the proviso that any of $R^8$ and $X^2$ has at least one hydroxyl group.

**6.** The copolymer according to claim 5,

(i) wherein $R^7$ in formula (a2) is hydrogen, and/or
(ii) wherein $R^8$ in formula (a2) is hydrogen or an alkyl which is substituted with a hydroxyl group and has 1 to 20 carbon atoms, and/or
(iii) wherein $X^2$ in formula (a2) is propylene or a structure represented by the following formula (c): $-CH_2CH(OH)CH_2OCH_2CH_2CH_2-$ (c), and/or

(iv) wherein $R^8$ is 2,3-dihydroxypropyl, and/or
(v) wherein at least one of $R^9$ to $R^{14}$ is methyl, and/or
(vi) wherein $R^{15}$ is methyl or n-butyl, and/or
(vii) wherein n is an integer of 1 to 6 and has no distribution.

**7.** The copolymer according to any of claims 1 to 6, further comprising at least one non-silicone hydrophilic monomer as a copolymerization component, optionally wherein the non-silicone hydrophilic monomer is selected from the group consisting of N,N-dimethyl acrylamide (DMA), N-vinylpyrrolidone (NVP), 2-hydroxyethyl acrylate, glycerol methacrylate, 2-hydroxyethyl methacrylamide, polyethylene glycol monomethacrylate, methacrylic acid, acrylic acid, N-vinyl-N-methylacetamide, N-vinyl-N-ethylacetamide, N-vinyl-N-ethylformamide, N-vinylformamide, N-2-hydroxyethylvinyl carbamate, N-carboxy-β-alanine N-vinyl ester, a reactive polyethylene polyol, a hydrophilic vinyl carbonate, a vinyl carbamate monomer, a hydrophilic oxazolone monomer, a hydrophilic oxazoline monomer and a combination thereof.

**8.** The copolymer according to any of claims 1 to 7,

(i) wherein the mass of the (meth)acrylamide monomer component is 50% by mass or greater based on the mass of all monomer components, and/or
(ii) wherein the multi-functional (meth)acrylamide monomer is present in an amount of 0.1 part by mass to 20 parts by mass, and/or
(iii) wherein the mono-functional silicone (meth)acrylamide monomer is present in an amount of 30 parts by mass to 98 parts by mass.

**9.** The copolymer according to any of claims 1 to 8, wherein the total number of the carbon atoms in the multi-functional (meth)acrylamide monomer except for the carbon atoms of (meth)acrylamide groups is from 4 to 20.

**10.** A material for medical device comprised of the copolymer according to any of claims 1 to 9.

**11.** The material for medical device according to claim 10, wherein the material for medical device is any one selected from an ophthalmic lens, an endoscope, a catheter, a transfusion tube, a gas transport tube, a stent, a sheath, a cuff, a tube connector, an access port, a drainage bag, a blood circuit, a wound covering material and a medicine carrier, optionally
wherein the ophthalmic lens is a contact lens.

**12.** The copolymer of claims 1-9 wherein the reactive mixture further comprises at least one wetting agent.

**13.** The copolymer of claim 12 wherein reactive mixture comprises 1 to 30% by weight wetting agent based upon total amount of reactive components.

**14.** The copolymer of claim 12 or 13

(i) wherein the wetting agent is selected from the group consisting of poly-N-vinyl pyrrolidone, poly-N-vinyl-2-piperidone, poly-N-vinyl-2-caprolactam, poly-N-vinyl-3-methyl-2-caprolactam, poly-N-vinyl-3-methyl-2-piperidone, poly-N-vinyl-4-methyl-2-piperidone, poly-N-vinyl-4-methyl-2-caprolactam, poly-N-vinyl-3-ethyl-2-pyrrolidone, poly-N-vinyl-4,5-dimethyl-2-pyrrolidone, polyvinyl imidazole, poly-N-vinyl formamide, poly-N-vinyl (methyl)acetamide, poly-N-methyl-N-vinyl (methyl)acetamide, poly-N-vinyl-N-(methyl)propionamide, poly-N-vinyl-N-methyl-2-(methyl)propionamide, poly-N-vinyl-2-(methyl)propionamide, poly-N-vinyl-N,N'-dimethylurea poly-N,N-dimethyl acrylamide, poly-N,N-diethyl acrylamide, poly-N-isopropyl acrylamide, polyvinyl alcohol, polyacrylate, polyethylene oxide, poly-2-ethyl oxazoline, heparine, polysaccharide, poly-acryloyl morpholine, and mixtures and copolymers thereof, and/or
(ii) wherein the wetting agent is selected from the group consisting of polyvinylpyrrolidone, poly-N,N-dimethyl acrylamide, polyacrylic acid, polyvinyl alcohol, poly-N-methyl-N-vinyl (methyl)acetamide and copolymers and mixtures thereof, and/or
(iii) wherein the wetting agent is selected from the group consisting of polyvinylpyrrolidone and poly-N,N-dimethyl acrylamide.

**15.** The copolymer of claim any of claims 12 to 14 wherein reactive mixture comprises 3 to 20% by weight wetting agent based upon total amount of reactive components.

**Patentansprüche**

1. Copolymer, das durch Polymerisieren einer reaktiven Mischung erhalten wird, die A und B umfasst:

(A) ein multifunktionelles (Meth)acrylamidmonomer, das keine Silikonatome, mindestens zwei (Meth)acrylamidgruppen und mindestens eine organische Gruppe aufweist, die irgendwelche zwei der (Meth)acrylamidgruppen in dem multifunktionellen (Meth)acrylamidmonomer verbinden, wobei die organische Gruppe, die die kürzeste Kettenlänge irgendeiner organischen Gruppe aufweist, die irgendwelche zwei (Meth)acrylamidgruppen verbindet, Folgendes aufweist:

1) 4 bis 20 Kohlenstoffatome, wenn jedes Stickstoffatom der (Meth)acrylamidgruppen mindestens ein Wasserstoffatom aufweist, das direkt an jedes Stickstoffatom in der (Meth)acrylamidgruppe gebunden ist; oder
2) 1 bis 20 Kohlenstoffatome, wenn mindestens ein Stickstoffatom irgendwelcher (Meth)acrylamidgruppen kein direkt daran gebundenes Wasserstoffatom aufweist; und

(B) ein monofunktionelles Silikon(meth)acrylamidmonomer.

2. Copolymer nach Anspruch 1, wobei das multifunktionelle (Meth)acrylamidmonomer zwei (Meth)acrylamidgruppen aufweist.

3. Copolymer nach Anspruch 2, wobei das multifunktionelle (Meth)acrylamidmonomer durch die Formel (a1) dargestellt ist:

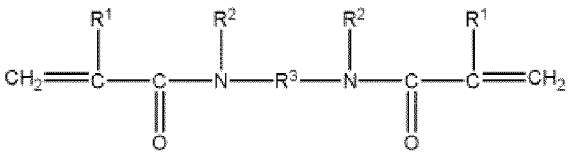
(a1)

wobei $R^1$ unabhängig unter Wasserstoff und Methyl ausgewählt ist; $R^2$ unabhängig unter Wasserstoff oder einem Alkyl, das 1 bis 20 Kohlenstoffatome aufweist, oder einem Aryl, das 6 bis 20 Kohlenstoffatome aufweist, ausgewählt ist; und $R^3$ unter einer substituierten oder unsubstituierten Alkylengruppe ausgewählt ist, die Folgendes aufweist:

i) 4 bis 20 Kohlenstoffatome, wenn $R^2$ in Wasserstoffatom ist;
oder
ii) 1 bis 20 Kohlenstoffatome, wenn $R^2$ etwas anderes als ein Wasserstoffatom ist.

4. Copolymer nach Anspruch 3, wobei $R^2$ in der allgemeinen Formel (a1) ein Alkyl ist, das 1 bis 20 Kohlenstoffatome aufweist; und/oder
wobei $R^3$ in der allgemeinen Formel (a1) eine Struktur ist, die durch die folgende Formel (b) dargestellt ist, wobei die Wiederholungseinheit a eine ganze Zahl von 1 bis 9 ist:

$-(CH_2CH_2O)_aCH_2CH_2-$ (b).

5. Copolymer nach irgendeinem der Ansprüche 1 bis 4,

(i) wobei das monofunktionelle Silikon(meth)acrylamidmonomer mindestens eine Hydroxylgruppe aufweist und/oder
(ii) wobei das monofunktionelle Silikon(meth)acrylamidmonomer ein lineares Silikon aufweist und/oder
(iii) das monofunktionelle Silikon(meth)acrylamidmonomer durch die Formel (a2) dargestellt ist:

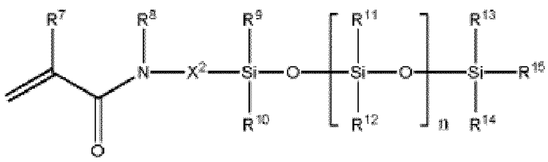
(a2)

wobei $R^7$ unter H und $CH_3$ ausgewählt ist; $R^8$ aus der Gruppe ausgewählt ist bestehend aus Wasserstoff, einem Alkyl, das mit einer Hydroxylgruppe substituiert sein kann und 1 bis 20 Kohlenstoffatome aufweist, oder einem Aryl, das mit einer Hydroxylgruppe substituiert sein kann und 6 bis 20 Kohlenstoffatome aufweist; $R^9$ bis $R^{14}$ jeweils unabhängig aus der Gruppe ausgewählt sind bestehend aus einem Alkyl, das 1 bis 20 Kohlenstoffatome aufweist, oder einem Aryl, das 6 bis 20 Kohlenstoffatome aufweist; $X^2$ eine zweiwertige organische Gruppe ist, die mit einer Hydroxylgruppe substituiert sein kann und 1 bis 20 Kohlenstoffatome aufweist; n eine ganze Zahl von 1 bis 1000 ist; $R^{15}$ ein Alkyl, das 1 bis 20 Kohlenstoffatome aufweist, oder ein Aryl ist, das 6 bis 20 Kohlenstoffatome aufweist; mit der Maßgabe, dass irgendeines von $R^8$ und $X^2$ mindestens eine Hydroxylgruppe aufweist.

**6.** Copolymer nach Anspruch 5,

(i) wobei $R^7$ in der Formel (a2) Wasserstoff ist und/oder
(ii) wobei $R^8$ in der Formel (a2) Wasserstoff oder ein Alkyl ist, das mit einer Hydroxylgruppe substituiert ist und 1 bis 20 Kohlenstoffatome aufweist, und/oder
(iii) wobei $X^2$ in der Formel (a2) Propylen oder eine Struktur ist, die durch die folgende Formel (c) dargestellt ist: $-CH_2CH(OH)CH_2OCH_2CH_2CH_2-$ (c) und/oder
(iv) wobei $R^8$ 2,3-Dihydroxypropyl ist und/oder
(v) wobei mindestens eines von $R^9$ bis $R^{14}$ Methyl ist und/oder
(vi) wobei $R^{15}$ Methyl oder n-Butyl ist und/oder
(vii) wobei n eine ganze Zahl von 1 bis 6 ist und keine Verteilung aufweist.

**7.** Copolymer nach irgendeinem der Ansprüche 1 bis 6, ferner mindestens ein hydrophiles Nichtsilikonmonomer als Copolymerisationskomponente umfassend, wobei wahlweise das hydrophile Nichtsilikonmonomer aus der Gruppe ausgewählt ist bestehend aus N,N-Dimethylacrylamid (DMA), N-Vinylpyrrolidon (NVP), 2-Hydroxyethylacrylat, Glycerinmethacrylat, 2-Hydroxyethylmethacrylamid, Polyethylenglycolmonomethacrylat, Methacrylsäure, Acrylsäure, N-Vinyl-N-methylacetamid, N-Vinyl-N-ethylacetamid, N-Vinyl-N-ethylformamid, N-Vinylformamid, N-2-Hydroxyethylvinylcarbamat, N-Carboxy-β-alanin-N-vinylester, einem reaktiven Polyethylenpolyol, einem hydrophilen Vinylcarbonat, einem Vinylcarbamatmonomer, einem hydrophilen Oxazolonmonomer, einem hydrophilen Oxazolinmonomer und einer Kombination davon.

**8.** Copolymer nach irgendeinem der Ansprüche 1 bis 7,

(i) wobei die Masse der (Meth)acrylamidmonomerkomponente 50 Masse-% oder mehr, auf die Masse aller Monomerkomponenten bezogen, beträgt und/oder
(ii) wobei das multifunktionelle (Meth)acrylamidmonomer in einer Menge von 0,1 Masseteilen bis 20 Masseteilen vorliegt und/oder
(iii) wobei das monofunktionelle Silikon(meth)acrylamidmonomer in einer Menge von 30 Masseteilen bis 98 Masseteilen vorliegt.

**9.** Copolymer nach irgendeinem der Ansprüche 1 bis 8, wobei die Gesamtanzahl der Kohlenstoffatome in dem multifunktionellen (Meth)acrylamidmonomer, mit Ausnahme der Kohlenstoffatome der (Meth)acrylamidgruppe, 4 bis 20 beträgt.

**10.** Material für medizinische Vorrichtung umfassend das Copolymer nach irgendeinem der Ansprüche 1 bis 9.

**11.** Material für medizinische Vorrichtung nach Anspruch 10, wobei das Material für medizinische Vorrichtung irgend eines ist ausgewählt unter einer ophthalmischen Linse, einem Endoskop, einem Katheter, einer Transfusionsröhre, einer Gastransportröhre, einem Stent, einem Schaft, einer Manschette, einer Röhrenverbindung, einer Zugangsöffnung, einem Ausflussbeutel, einem Blutkreislauf, einem Wundenbedeckungsmaterial und einem Medikamentträger,
wobei wahlweise die ophthalmische Linse eine Kontaktlinse ist.

**12.** Copolymer nach den Ansprüchen 1-9, wobei die reaktive Mischung ferner mindestens ein Benetzungsmittel umfasst.

**13.** Copolymer nach Anspruch 12, wobei die reaktive Mischung 1 bis 30 Gew.-% Benetzungsmittel, auf die Gesamtmenge an reaktiven Komponenten bezogen, umfasst.

**14.** Copolymer nach Anspruch 12 oder 13,

(i) wobei das Benetzungsmittel aus der Gruppe ausgewählt ist bestehend aus Poly-N-vinylpyrrolidon, Poly-N-vinyl-2-piperidon, Poly-N-vinyl-2-caprolactam, Poly-N-vinyl-3-methyl-2-caprolactam, Poly-N-vinyl-3-methyl-2-piperidon, Poly-N-vinyl-4-methyl-2-piperidon, Poly-N-vinyl-4-methyl-2-caprolactam, Poly-N-vinyl-3-ethyl-2-pyrrolidon, Poly-N-vinyl-4,5-dimethyl-2-pyrrolidon, Polyvinylimidazol, Poly-N-vinylformamid, Poly-N-vinyl(methyl)acetamid, Poly-N-methyl-N-vinyl(methyl)acetamid, Poly-N-vinyl-N-(methyl)propionamid, Poly-N-vinyl-N-methyl-2-(methyl)propionamid, Poly-N-vinyl-2-(methyl)propionamid, Poly-N-vinyl-N,N'-dimethylharnstoff-poly-N,N-dimethylacrylamid, Poly-N,N-diethylacrylamid, Poly-N-isopropylacrylamid, Polyvinylalkohol, Polyacrylat, Polyethylenoxid, Poly-2-ethyloxazolin, Heparin, Polysaccharid, Polyacryloylmorpholin und Mischungen und Copolymeren davon und/oder
(ii) wobei das Benetzungsmittel aus der Gruppe ausgewählt ist bestehend aus Polyvinylpyrrolidon, Poly-N,N-dimethylacrylamid, Polyacrylsäure, Polyvinylalkohol, Poly-N-methyl-N-vinyl(methyl)acetamid und Copolymeren und Mischungen davon und/oder
(iii) wobei das Benetzungsmittel aus der Gruppe ausgewählt ist bestehend aus Polyvinylpyrrolidon und Poly-N,N-dimethylacrylamid.

**15.** Copolymer nach irgendeinem der Ansprüche 12 bis 14, wobei die reaktive Mischung 3 bis 20 Gew.-% Benetzungsmittel, auf die Gesamtmenge reaktiver Komponenten bezogen, umfasst.

**Revendications**

**1.** Copolymère obtenu par polymérisation d'un mélange réactif comprenant A et B :

(A) un monomère de (méth)acrylamide multifonctionnel ne comportant pas d'atomes de silicium, au moins deux groupes (méth)acrylamide, et au moins un groupe organique reliant deux quelconques des groupes (méth)acrylamide dans le monomère de (méth)acrylamide multifonctionnel, dans lequel le groupe organique ayant la longueur de chaîne la plus courte d'un groupe organique quelconque reliant deux groupes (méth)acrylamide quelconques comporte :

1) 4 à 20 atomes de carbone lorsque chaque atome d'azote des groupes (méth)acrylamide comporte au moins un atome d'hydrogène qui est directement lié à chaque atome d'azote dans le groupe (méth)acrylamide ; ou
2) 1 à 20 atomes de carbone lorsqu'au moins un atome d'azote de groupes (méth)acrylamide quelconques ne comporte aucun atome d'hydrogène directement lié à celui-ci ; et

(B) un monomère de (méth)acrylamide de silicone monofonctionnel.

**2.** Copolymère selon la revendication 1, dans lequel le monomère de (méth)acrylamide multifonctionnel comporte deux groupes (méth)acrylamide.

**3.** Copolymère selon la revendication 2, dans lequel le monomère de (méth)acrylamide multifonctionnel est représenté par la formule (a1) :

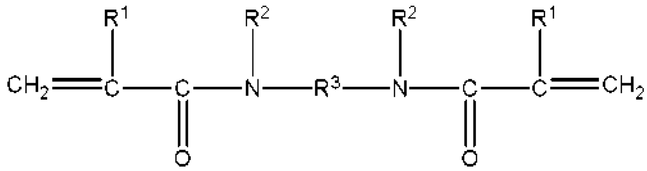

(a1)

dans laquelle $R^1$ est indépendamment choisi parmi hydrogène et méthyle ; $R^2$ est indépendamment choisi parmi hydrogène, ou un alkyle ayant 1 à 20 atomes de carbone, ou un aryle ayant 6 à 20 atomes de carbone ; et $R^3$ est choisi parmi un groupe alkylène substitué ou non substitué ayant ;

i) 4 à 20 atomes de carbone lorsque $R^2$ est un atome d'hydrogène ; ou

ii) 1 à 20 atomes de carbone lorsque $R^2$ est autre qu'un atome d'hydrogène.

**4.** Copolymère selon la revendication 3, dans lequel $R^2$ dans la formule générale (a1) est un alkyle ayant 1 à 20 atomes de carbone ; et/ou
dans lequel $R^3$ dans la formule générale (a1) est une structure représentée par la formule (b) suivante, dans lequel l'unité de répétition a est un entier de 1 à 9 :

$$-(CH_2CH_2O)_aCH_2CH_2- \quad (b).$$

**5.** Copolymère selon l'une quelconque des revendications 1 à 4,

(i) dans lequel le monomère de (méth)acrylamide de silicone monofonctionnel comporte au moins un groupe hydroxyle, et/ou
(ii) dans lequel le monomère de (méth)acrylamide de silicone monofonctionnel comporte un silicone linéaire, et/ou
(iii) le monomère de (méth)acrylamide de silicone monofonctionnel est représenté par la formule (a2) :

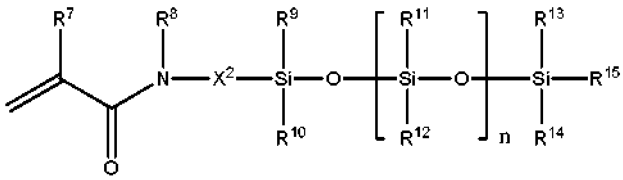

(a2)

dans laquelle, $R^7$ est choisi parmi H et $CH_3$ ; $R^8$ est choisi dans le groupe constitué d'hydrogène, un alkyle qui peut être substitué par un groupe hydroxyle et comporte 1 à 20 atomes de carbone, ou un aryle qui peut être substitué par un groupe hydroxyle et comporte 6 à 20 atomes de carbone ; $R^9$ à $R^{14}$ sont chacun indépendamment choisis dans le groupe constitué d'un alkyle ayant 1 à 20 atomes de carbone, ou un aryle ayant 6 à 20 atomes de carbone ; $X^2$ est un groupe organique divalent qui peut être substitué par un groupe hydroxyle et comporte 1 à 20 atomes de carbone ; n est un entier de 1 à 1000 ; $R^{15}$ est un alkyle ayant 1 à 20 atomes de carbone, ou un aryle ayant 6 à 20 atomes de carbone ; à condition que l'un quelconque de $R^8$ et $X^2$ comporte au moins un groupe hydroxyle.

**6.** Copolymère selon la revendication 5,

(i) dans lequel $R^7$ dans la formule (a2) est hydrogène, et/ou
(ii) dans lequel $R^8$ dans la formule (a2) est hydrogène ou un alkyle qui est substitué par un groupe hydroxyle et comporte 1 à 20 atomes de carbone, et/ou
(iii) dans lequel $X^2$ dans la formule (a2) est propylène ou une structure représentée par la formule (c) suivante : $-CH_2CH(OH)CH_2OCH_2CH_2CH_2-$ (c), et/ou
(iv) dans lequel $R^8$ est 2,3-dihydroxypropyle, et/ou
(v) dans lequel au moins l'un de $R^9$ à $R^{14}$ est méthyle, et/ou
(vi) dans lequel $R^{15}$ est méthyle ou n-butyle, et/ou
(vii) dans lequel n est un entier de 1 à 6 et n'a aucune distribution.

**7.** Copolymère selon l'une quelconque des revendications 1 à 6, comprenant en outre au moins un monomère hydrophile non-silicone en tant que composant de copolymérisation, facultativement dans lequel le monomère hydrophile non-silicone est choisi dans le groupe constitué de N,N-diméthylacrylamide (DMA), N-vinylpyrrolidone (NVP), acrylate de 2-hydroxyéthyle, méthacrylate de glycérol, 2-hydroxyéthylméthacrylamide, monométhacrylate de polyéthylène glycol, acide méthacrylique, acide acrylique, N-vinyl-N-méthylacétamide, N-vinyl-N-éthylacétamide, N-vinyl-N-éthylformamide, N-vinylformamide, carbamate de N-2-hydroxyéthylvinyle, ester N-vinylique de N-carboxy-β-alanine, un polyéthylène polyol réactif, un carbonate de vinyle hydrophile, un monomère de carbamate de vinyle, un monomère d'oxazolone hydrophile, un monomère d'oxazoline hydrophile et une combinaison de ceux-ci.

**8.** Copolymère selon l'une quelconque des revendications 1 à 7,

(i) dans lequel la masse du composant de monomère de (méth)acrylamide est de 50 % en masse ou plus sur

la base de la masse de l'ensemble des composants de monomère, et/ou
(ii) dans lequel le monomère de (méth)acrylamide multifonctionnel est présent en une quantité de 0,1 partie en masse à 20 parties en masse, et/ou
(iii) dans lequel le monomère de (méth)acrylamide de silicone monofonctionnel est présent en une quantité de 30 parties en masse à 98 parties en masse.

**9.** Copolymère selon l'une quelconque des revendications 1 à 8, dans lequel le nombre total des atomes de carbone dans le monomère de (méth)acrylamide multifonctionnel, à l'exception des atomes de carbone de groupes (méth)acrylamide, est de 4 à 20.

**10.** Matériau pour dispositif médical constitué du copolymère selon l'une quelconque des revendications 1 à 9.

**11.** Matériau pour dispositif médical selon la revendication 10, le matériau pour dispositif médical étant l'un quelconque choisi parmi une lentille ophtalmique, un endoscope, un cathéter, un tube de transfusion, un tube de transport de gaz, un stent, une gaine, un brassard, un collecteur de tube, un orifice d'accès, une poche de drainage, un circuit sanguin, un matériau de recouvrement de plaie et un véhicule de médicament, la lentille ophtalmique étant facultativement une lentille de contact.

**12.** Copolymère selon les revendications 1 à 9, le mélange réactif comprenant en outre au moins un agent mouillant.

**13.** Copolymère selon la revendication 12, le mélange réactif comprenant 1 à 30 % en poids d'agent mouillant sur la base de la quantité totale de composants réactifs.

**14.** Copolymère selon la revendication 12 ou 13

(i) dans lequel l'agent mouillant est choisi dans le groupe constitué des poly-N-vinylpyrrolidone, poly-N-vinyl-2-pipéridone, poly-N-vinyl-2-caprolactame, poly-N-vinyl-3-méthyl-2-caprolactame, poly-N-vinyl-3-méthyl-2-pipéridone, poly-N-vinyl-4-méthyl-2-pipéridone, poly-N-vinyl-4-méthyl-2-caprolactame, poly-N-vinyl-3-éthyl-2-pyrrolidone, poly-N-vinyl-4,5-diméthyl-2-pyrrolidone, polyvinylimidazole, poly-N-vinylformamide, poly-N-vinyl(méthyl)acétamide, poly-N-méthyl-N-vinyl(méthyl)acétamide, poly-N-vinyl-N-(méthyl)propionamide, poly-N-vinyl-N-méthyl-2-(méthyl)propionamide, poly-N-vinyl-2-(méthyl)propionamide, poly-N-vinyl-N,N'-diméthylurée, poly-N,N-diméthylacrylamide, poly-N,N-diéthylacrylamide, poly-N-isopropylacrylamide, alcool polyvinylique, polyacrylate, poly(oxyde d'éthylène), poly-2-éthyloxazoline, héparine, polysaccharide, poly-acryloylmorpholine, et des mélanges et des copolymères de ceux-ci, et/ou
(ii) dans lequel l'agent mouillant est choisi dans le groupe constitué de polyvinylpyrrolidone, poly-N,N-diméthylacrylamide, poly(acide acrylique), alcool polyvinylique, poly-N-méthyl-N-vinyl(méthyl)acétamide et des copolymères et des mélanges de ceux-ci, et/ou
(iii) dans lequel l'agent mouillant est choisi dans le groupe constitué de la polyvinylpyrrolidone et de la poly-N,N-diméthylacrylamide.

**15.** Copolymère selon l'une quelconque des revendications 12 à 14, dans lequel le mélange réactif comprend 3 à 20 % en poids d'agent mouillant sur la base de la quantité totale de composants réactifs.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7396890 B
- US 7214809 B
- JP H10212355 B
- US 4711943 A
- WO 2013024801 A
- WO 2010147874 A
- WO 2010071691 A
- US 20110009519 A
- EP 1956033 A
- WO 2011116206 A
- WO 2011116210 A
- US 20060072069 A1
- US 6367929 B
- US 20080045612 A1
- WO 0322321 A
- WO 0322322 A
- WO 2004517163 A


### Non-patent literature cited in the description


- **J.V. CRIVELLO ; K. DIETLIKER.** Photoinitiators for Free Radical Cationic & Anionic Photopolymerization. John Wiley and Sons, 1998, vol. III